## Europäisches Patentamt

## European Patent Office

## Office européen des brevets

(11) Veröffentlichungsnummer: **0 218 555**
**A2**

## EUROPÄISCHE PATENTANMELDUNG

(21) Anmeldenummer: 86810432.4

(22) Anmeldetag: 02.10.86

(51) Int. Cl.⁴: **G 02 F 1/01**
G 02 F 1/29, C 30 B 29/30,
C 30 B 29/32, C 30 B 33/00

(30) Priorität: 11.10.85 CH 4396/85

(43) Veröffentlichungstag der Anmeldung:
15.04.87 Patentblatt 87/16

(84) Benannte Vertragsstaaten:
AT BE CH DE FR GB LI

(71) Anmelder: Gesellschaft zur Förderung der
industrieorientierten Forschung an den Schweizerischen
Hochschulen und weiteren Institutionen
c/o Dr. K. Vögtli Jupiterstrasse 57/1251
CH-3651 Bern (CH)

(72) Erfinder: Günter, Peter, PD Dr.
Guggebühlstrasse 2
CH-8952 Schlieren (CH)

Voit, Eugen
Nöschikonerstrasse 28
CH-8155 Niederhasli (CH)

(74) Vertreter: Eder, Carl E. et al
Patentanwaltsbüro EDER AG Münchensteinerstrasse 2
CH-4052 Basel (CH)

(54) Verfahren und Einrichtung zur veränderbaren Lichtablenkung und/oder zur ortsabhängigen Lichtmodulation durch Beugung.

(57) In einen Körper mit lichtdurchlässigem, doppelbrechendem Material, dessen optische Brechungseigenschaften durch Licht veränderbar sind, wird durch Einstrahlen von zwei Schreib-Lichtbündeln ein Beugungsgitter erzeugt und an diesem ein Lese-Lichtbündel abgebeugt. Durch Ändern der Frequenz oder eventuell Einstrahlungsrichtung der Schreib-Lichtbündel oder durch Einstrahlen eines Modulations-Lichtbündels können das abgebeugte Lese-Lichtbündel in verschiedene Richtungen abgelenkt bzw. räumlich moduliert werden. Die Richtungen und Polarisationen der eingestrahlten Lichtbündel werden derart festgelegt, dass die Beugung anisotrop ist, das eingestrahlte sowie das abgebeugte Lese-Lichtbündel verschiedene, lineare Polarisationen haben und sich im Innern des Körpers mit verschiedenen Wellenzahlen ($k_l$, $k_d$) ausbreiten. Dies ermöglicht, beim Ändern der Richtung oder beim Modulieren des abgebeugten Lese-Lichtbündels in einfacher Weise ohne die Richtungen des eingestrahlten Lese-Lichtbündels und des Gittervektors ($g$) bezüglich einander zu ändern. die Abweichung von der Bragg-Bedingung gering zu halten und damit einen grossen und von der Ablenkungsrichtung bzw. vom Modulationszustand relativ unabhängigen Beugungswirkungsgrad zu erzielen.

FIG. 6

FIG. 8

**Beschreibung**

Verfahren und Einrichtung zur veränderbaren Lichtablenkung und/oder zur ortsabhängigen Lichtmodulation durch Beugung

Die Erfindung betrifft ein Verfahren gemäss dem Oberbegriff des Anspruchs 1 und eine Einrichtung gemäss dem Oberbegriff des Anspruchs 9.

Für die optische Datenverarbeitung und für andere optoelektronische oder optische Anwendungen besteht ein Bedarf an Verfahren und Einrichtungen zur zeit- und/oder ortsabhängig veränderlichen Lichtbeugung, um beispielsweise ein aus kohärentem Licht bestehendes Lichtbündel zeitabhängig veränderbar abzulenken und/oder orts- und eventuell auch zeitabhängig zu modulieren.

Bekannte, diesem Zweck dienende akusto-optische Einrichtungen weisen einen lichtdurchlässigen Körper auf, dem mit einem piezoelektrischen Erreger Schallwellen zugeführt werden. Die Schallwellen bilden ein Beugungsgitter, an dem das in den Körper eingestrahlte Lichtbündel abgelenkt und moduliert werden kann. Die akusto-optischen Einrichtungen haben den Nachteil, dass die mit ihnen erzielbaren Schaltzeiten durch die von den Schallwellen zum Durchlaufen des Lichtbündels benötigten Zeitdauern gegeben und daher wegen der verhältnismässig niedrigen Geschwindigkeit der transversalen Schallwellen auf relativ grosse Werte begrenzt sind. Da die Beugung des Lichts bei den akusto-optischen Einrichtungen an sich fortbewegenden Schallwellen stattfindet, wird das im Körper gebeugte Licht infolge des Dopplereffekts einer Frequenzverschiebung unterworfen, was für viele Zwecke ebenfalls nachteilig ist. Ferner ist es schwierig und aufwendig, Schallwellen zu erzeugen, deren Frequenzen mindestens 100 oder sogar unge fähr oder mindestens 1 000 MHz betragen, wie es zur Erzielung günstiger Eigenschaften nötig oder zumindest wünschenswert ist.

Es sind nun auch bereits Verfahren und Einrichtungen bekannt, bei denen in einem aus einem lichtdurchlässigen, kristallinen, optisch anisotropen, photorefraktiven Material bestehenden Körper zwei kohärente, miteinander einen Winkel bildende Schreib-Lichtbündel eingestrahlt werden, die miteinander interferieren und dadurch eine stehende Welle erzeugen. Diese bewirkt durch elektro-optische Effekte eine örtlich variierende Deformation der optischen Indikatrix des Körpers, die auch als Fletschersche Indikatrix bezeichnet wird. Dabei entsteht ein Beugungsgitter mit Gitterebenen, deren Abstände gleich der Wellenlänge der stehenden Welle sind. In den Körper wird ferner ein Lese-Lichtbündel eingestrahlt, das das Beugungsgitter "liest" und durch Beugung ein abgebeugtes Lese-Lichtbündel erzeugt, das gegenüber dem einfallenden Lese-Lichtbündel abgelenkt ist. Durch Ändern der Frequenz der Schreib-Lichtbündel können die Abstände der Gitterebenen und damit der Winkel zwischen dem einfallenden und dem abgebeugten Strahl verändert werden.

Bei der Beugung muss die Lichtfrequenz des abgebeugten Lichtbündels erhalten bleiben. Ferner müssen die Winkel, die das in den lichtdurchlässigen Körper eingestrahlte und das abgebeugte Lese-Lichtbündel mit den Gitterebenen des Beugungsgitters bilden, die Bragg-Bedingung erfüllen. Diese kann in vektorieller Form ausgedrückt werden durch die Gleichung:

$$\vec{k}_d = \vec{k}_i \pm \vec{k}_g$$

In dieser ist $\vec{k}_g$ der Wellenvektor der stehenden Welle, der gleichzeitig einen Gittervektor des Beugungsgitters bildet und rechtwinklig zu den Gitterebenen verläuft. Bei den beiden anderen in der Gleichung (1) vorkommenden Vektoren handelt es sich um den Wellenvektor $\vec{k}_i$ eines sich im Inneren des Körpers befindenden Teils des eingestrahlten Lese-Lichtbündels und den Wellenvektor $\vec{k}_d$ des im Innern des Körpers vorhandenen Teils des abgebeugten Lese-Lichtbündels. Die Längen der drei Vektoren sind gleich der Wellenzahl $k_g$ der stehenden Welle und des Gittervektors $\vec{k}_g$ bzw. der Wellenzahl $k_i$ des genannten Teils des eingestrahlten, bzw. der Wellenzahl $k_d$ des genannten Teils des abgebeugten Lese-Lichtbündels. Ferner sei $\lambda_g$ die Wellenlänge der stehenden Welle und damit gleich dem Abstand von einander am nächsten benachbarten Gitterebenen des Beugungsgitters.

In diesem Zusammenhang sei zur Klarstellung noch darauf hingewiesen, dass unter der Polarisationsrichtung des Lichts, die auch kurz als Polarisation bezeichnet wird, gemäss einer neuen Definition die Richtung des dielektrischen Verschiebungsvektors $\vec{D}$ verstanden wird. Die Polarisationsrichtung ist dementsprechend rechtwinklig zum dem betreffenden Lichtbündel zugeordneten Wellenvektor.

Ferner sei noch der Begriff "Wellenvektorfläche" erläutert. Darunter ist diejenige, geschlossene, ihren Mittelpunkt umschliessende Fläche zu verstehen, deren Punkte vom Mittelpunkt einen Abstand haben, der gleich der Wellenzahl einer vom Mittelpunkt zum betreffenden Punkt der Fläche gerichteten Wellennormalen ist. Die Wellenvektorfläche stellt also den geometrischen Ort der Endpunkte der möglichen, im Mittelpunkt beginnenden Wellenvektoren dar.

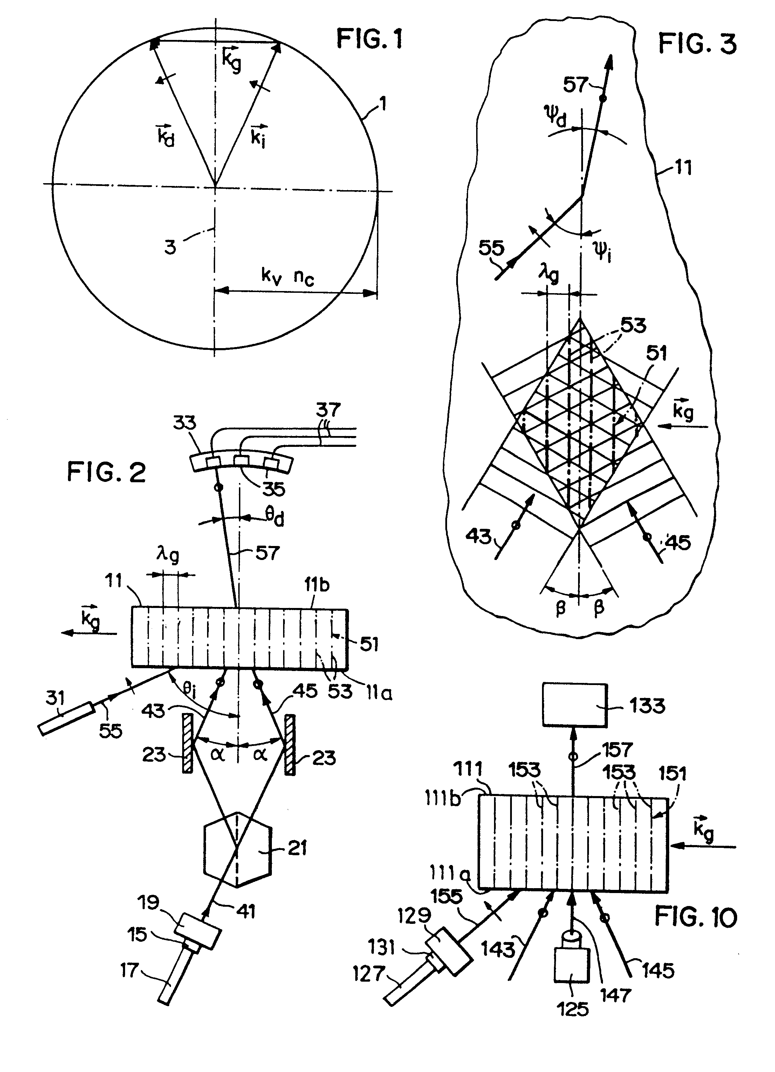

Bei den bekannten, mit der Einstrahlung von Schreib-Lichtbündeln arbeitenden Verfahren und Einrichtungen zur zeitlich veränderbaren Lichtablenkung werden die beiden Schreib-Lichtbündel und das Lese-Lichtbündel entlang einer zur kristallographischen c-Achse parallelen Ebene in den kristal linen, lichtdurchlässigen Körper eingestrahlt. Die durch Interferenz der Schreib-Lichtbündel erzeugte, stehende Welle deformiert dann die optische Indikatrix des Körpers derart, dass dessen Hauptbrechzahl $n_c$ ortsabhängig verändert wird. Dagegen wird die Indikatrix nicht gedreht, so dass also alle Ellipsoid-Achsen der deformierten Indikatrix die gleiche Richtung haben, wie bei der undeformierten Indikatrix. Obschon der Körper aus einem kristallinen, optisch anisotropen Material besteht, erfolgt die Beugung des Lese-Lichtbündels bei diesen bekannten Verfahren optisch isotrop. Dies soll nun anhand der Figur 1 näher erläutert werden, die einen nichterfindungsgemässen, isotropen Beugungsvorgang veranschaulicht. Die Figur 1 zeigt einen Schnitt durch die Wellenvektorfläche des kristallinen Körpers entlang der der von den Schreib- und Lese-Lichtbündeln aufgespannten, parallel zur kristallographischen c-Achse verlaufenden Ebene. Die sich ergebende Schnittlinie 1 der Wellenvektorfläche bildet einen Kreis mit dem Radius $k_v \, n_c$, wobei $k_v$ die Wellenzahl des Lese-Lichts im Vakuum und $n_c$ die bereits erwähnte Hauptbrechzahl der Indikatrix ist. In der Figur 1 sind ferner eine Gitterebene 3 des Beugungsgitters, der Wellen- oder Gittervektor $\vec{k}_g$, der Wellenvektor $\vec{k}_l$ des sich im kristallinen Körper befindenden Teils des einfallenden Lese-Lichtbündels und der Wellenvektor $\vec{k}_d$ des sich im Innern des Körpers befindenden Teils des abgebeugten Lese-Lichtbündels dargestellt. Die die beiden Vektoren $\vec{k}_i$ und $\vec{k}_d$ kreuzenden Pfeile sollen andeuten, dass die Polarisation der zugehörigen Lese-Lichtbündel in der Zeichnungsebene liegt. Die beiden Vektoren $\vec{k}_i$ und $\vec{k}_d$ verlaufen entsprechend der Definition der Wellenvektorfläche von deren Mittelpunkt bis zur kreisförmigen Schnittlinie 1. Da die Normalengeschwindigkeiten des eingestrahlten und des abgebeugten Lese-Lichtbündels durch die gleiche Brechzahl $n_c$ bestimmt sind und die Polarisation beim Beugungsvorgang erhalten bleibt, ist die Beugung eben im Sinne der vorgängigen Angabe isotrop. Es findet also eine normale Bragg-Beugung statt, bei der die Winkel, die das einfallende und das abgebeugte Lese-Lichtbündel mit den Gitterebenen des Beugungsgitters bilden, die normale Bragg-Bedingung erfüllen und insbesondere gleich gross sind. Wenn man daher den Winkel, den das abgebeugte Lese-Lichtbündel, d.h. der Wellenvektor $\vec{k}_d$ mit der Gitterebene 3 bildet, durch Verändern des Abstandes der Gitterebenen und damit der Länge des Vektors $\vec{k}_g$ verändert, muss auch der Winkel, den das einfallende Lese-Lichtbündel mit der Gitterebene 3 bildet, um den gleichen Wert geändert werden, da sonst die Intensität des abgebeugten Lichtbündels sehr gering wird. Untersuchungen haben nämlich gezeigt, dass bei der isotropen, durch die Figur 1 veranschaulichten Beugung die Intensität des abgebeugten Lese-Lichtbündels praktisch Null wird, wenn die Richtung des einfallenden Lese-Lichtbündel etwa 0,2° oder mehr von der zur Erfüllung der Bragg-Bedingung erforderlichen Richtung abweicht. Bei den bekannten, mit optisch isotroper Beugung arbeitenden Verfahren und Einrichtungen zur veränderbaren Ablenkung stellt sich also das Problem, dass beim Ändern des Ablenkungswinkels auch der Winkel geändert werden sollte, den das einfallende Lese-Lichtbündel mit den Gitterebenen bildet.

Aus der Publikation "Opto-optical light deflection", Glenn T. Sincerbox and Gerald Roosen, Applied Optics, Vol. 22, Nr. 5, 1983, Seiten 690 bis 697 ist es beispielsweise bekannt, zwei Schreib-Lichtbündel und ein Lese-Lichtbündel in einen aus einem optisch einachsigen Kristall, nämlich einem Lithiumniobat-Kristall bestehenden Körper einzustrahlen und das Lese-Lichtbündel durch Verändern der Frequenz der das Beugungsgitter erzeugenden Schreib-Lichtbündel mehr oder weniger stark abzulenken. Dabei liegen die Strahlungsrichtungen der eingestrahlten Schreib-Lichtbündel und des eingestrahlten sowie des abgebeugten Lese-Lichtbündels in einer zur kristallographischen c-Achse parallelen Ebene. Die Schreib-Lichtbündel werden ferner derart eingestrahlt, dass die Gitterebenen des von ihnen erzeugten Beugungsgitters rechtwinklig zur c-Achse verlaufen. Die Polarisation der Schreib-Lichtbündel ist rechtwinklig zu einer von den Strahlungsrichtungen der verschiedenen Lichtbündel aufgespannten Ebene, während die Polarisation des einfallenden und abgelenkten Lese-Lichtbündels parallel zur gleichen, zur c-Achse parallelen Ebene sind wie die verschiedenen Lichtbündel. Es findet dann entsprechend der Figur 1 eine isotrope Beugung statt. Damit die Bragg-Bedingung für verschiedene Ablenkungswinkel möglichst gut erfüllt werden kann, ist vorgesehen, beim durch Ändern der Wellenlänge der Schreib-Lichtbündel erfolgenden Ändern der Abstände der Gitterebenen des Beugungsrasters gleichzeitig auch den Winkel zu ändern, den die Gitterebenen bezüglich irgend einer Fläche des kristallinen Körpers bilden. Zu diesem Zweck werden die beiden zur Erzeugung des Beugungsgitters dienenden Schreib-Lichtbündel vor ihrer Einstrahlung mit Beugungsgittern gebeugt sowie umgelenkt und über afokale, optische Vorrichtungen in den Kristall eingestrahlt. Die Einstrahlungsrichtungen der beiden Schreib-Lichtbündel und die Anordnungen und Ausbildungen der in ihre Strahlenwege eingeschalteten Beugungsgitter und afokalen Vorrichtungen müssen sehr genau aufeinander und auf die Stellung des Kristalls sowie die Einstrahlungsrichtung des Lese-Lichtbündels abgestimmt werden. Die in die Strahlenwege der Schreib-Lichtbündel eingeschalteten Beugungsgitter und afokalen Vorrichtungen verursachen daher eine beträchtliche Komplikation der Einrichtung sowie eine dementsprechende Vergrösserung des Platzbedarfs und der Kosten einer solchen Einrichtung. Ferner werden die Möglichkeiten für die Anpassung der Einstrahlungsrichtungen und anderer Parameter an besondere Anwendungen stark eingeengt.

Ähnliche Probleme wie bei der veränderbaren, optisch steuerbaren Ablenkung stellen sich auch bei Modulationsvor gängen, bei denen zum Beispiel ein kohärentes Lese-Lichtbündel in einem kristallinen, photorefraktiven Körper durch Modulation eines mit kohärentem Schreib-Licht erzeugten Beugungsgitters mit einem ein Bild darstellenden, inkohärenten Modulations-Lichtbündel moduliert werden soll. Die Modulation bewirkt nämlich örtlich variierende Änderungen des Gittervektors. Es sei diesbezüglich etwa auf die Publikation "Physical characterization of the photorefractive incoherent-to-coherent optical converter", A. Marrakchi, A.R. Tanguay Jr; J. Yu, D. Psaltis, Optical Engineering. 1985, Vol. 24, Nr. 1 Seiten 124 bis 131 verwiesen. In dieser Publikation werden zwei Varianten erörtert, bei denen der Wellenvektor des inkohärenten Lichts parallel bzw. in einer bestimmten Weise schiefwinklig zum Gittervektor des Beugungsgitters gerichtet ist, wobei die zweite Variante kleinere Abweichungen von der Bragg-Bedingung ergeben soll. Die sich ergebenden Abweichungen von der Bragg-Bedingung sind aber auch bei der zweiten Variante noch verhältnismässig gross. Die zweite Variante mit schiefwinkliger Richtung des inkohärenten Modulations-Lichts bedingt zudem praktisch zwangsläufig, dass die Wellenfronten des Modulations-Lichts bezüglich den Grenzflächen des lichtdurchlässigen Körpers geneigt sind, was die Verwendung eines Körpers mit verhältnismässig grossen Abmessungen notwendig macht und wegen Absorptions- und Dispersionseffekten Fehler im Bild verursachen kann, das durch das modulierte Lese-Lichtbündel dargestellt ist.

In der weiter vorne erwähnten Publikation von Glenn T. Sincerbox und Gerald Roosen ist angegeben. dass der als opto-optischer Deflektor dienende Körper beispielsweise aus einem $LiNbO_3$- oder $Bi_{12}SiO_{20}$- oder $BaTiO_3$-Kristall oder einem Rubin bestehen kann. Es ist nun bekannt. dass die photorefraktiven Eigenschaften dieser und anderer bekannter, photorefraktiver Materialien durch eine Reduktionsbehandlung beeinflusst und eingestellt werden können, wobei ein für die gewünschte Beeinflussung wichtiger Vorgang gemäss den derzeitigen Kenntnissen vermutlich darin besteht. dass im Kristall vorhandene Eisenionen $Fe^{3+}$ zu Eisenionen $Fe^{2+}$ reduziert werden. Es sei diesbezüglich beispielsweise auf die Publikation "Holography. coherent light amplification and optical phase conjugation with photorefractive materials". P. Günter, Physics Reports (Review Section of Physics Letters) 93, Nr. 4. 1982. Seiten 199 bis 299, und zwar insbesondere auf das Kapitel 2.1 dieser Publikation verwiesen. Es ist bekannt, aus einem photorefraktiven Material bestehende Körper für eine solche Reduktionsbehandlung in einer Wasserstoff-Umgebung zu erhitzen, und zwar auf eine beispielsweise etwa 900° C betragende Temperatur. Eine Reduktionsbehandlung bei so hohen Temperaturen hat jedoch den Nachteil, dass die Körper beschädigt oder zerstört werden können, wobei beispielsweise beim Kaliumniobat insbesondere die bei ungefähr 220° C stattfindende Phasenumwandlung wesentlich zur Beschädigung oder Zerstörung beitragen kann.

Der Erfindung liegt nun die Aufgabe zugrunde, ein Verfahren sowie eine Einrichtung der einleitend genannten Art zur Behebung von Nachteilen der bekannten Verfahren und Einrichtungen zu schaffen. Das Verfahren und die Einrichtungen sollen insbesondere ermöglichen, ein Lese-Lichtbündel mit möglichst einfachen Mitteln "opto-optisch" durch Beugung in Abhängigkeit von der Zeit veränderbar abzulenken und/oder ortsabhängig und eventuell zeitabhängig zu modulieren und dabei einen hohen sowie von der Ablenkungsrichtung bzw. Modulation möglichst unabhängigen Beugungswirkungsgrad zu erzielen, wobei beispielsweise eine Änderung der Ablenkung ermöglicht werden soll, ohne dass gemäss der vorgängig erwähnten Publikation von Glenn T. Sincerbox und Gerald Roosen gleichzeitig die Abstände der Gitterebenen des Beugungsgitters und die Richtung des Gittervektors geändert werden müssen.

Diese Aufgabe wird durch ein Verfahren und eine Einrichtung der einleitend genannten Art gelöst. wobei das Verfahren und die Einrichtung erfindungsgemäss durch den kennzeichnenden Teil des Anspruchs 1 bzw. 9 gekennzeichnet sind. Vorteilhafte Ausgestaltungen des Verfahrens gehen aus den vom Anspruch 1 abhängigen Ansprüchen hervor.

Die Lichtablenkung und/oder Lichtmodulation kann in einem Körper erfolgen, der als kristallines Material einen festen Kristall aufweist und abgesehen von allenfalls vorhandenen Beschichtungen und Befestigungsmitteln ausschliesslich aus einem Kristall, insbesondere einem optisch zwei- oder eventuell einachsigen Kristall, beispielsweise einen Einkristall besteht. Das Beugungsgitter kann in diesem Fall durch Einstrahlen von mindestens einem und im allgemeinen von zwei kohärenten Schreib-Lichtbündeln elektro-optisch, d.h. über ein durch das Schreib-Licht gebildetes. elektrisches Feld erzeugt werden.

Zur Lichtablenkung und/oder Lichtmodulation könnte man jedoch eventuell auch einen Körper mit einem anisotropen, doppelbrechenden. zum Beispiel optisch ein- oder eventuell zweiachsigen Flüssigkristall versehen. dessen optische Brechungseigenschaften durch Licht veränderbar sind und der also photoreaktive oder zumindest photoreaktivartige Eigenschaften hat. In diesem Fall müsste das flüssige, kristalline oder. genauer gesagt, zumindest in gewisser Hinsicht kristallartige Material des Flüssigkristalls selbstverständlich im Innenraum einer festen Kammer angeordnet sein. die zumindest zum Teil lichtdurchlässige Begrenzungsteile hat und zum Beispiel durch zwei ebene, optisch isotrope Glasplättchen und eine dazwischen angeordnete. rahmenförmige Distanzfolie gebildet ist. In einem aus geeignetem Material bestehenden Flüssigkristall kann durch Einstrahlen von mindestens einem kohärenten Schreib-Lichtbündel und im allgemeinen von zwei solchen ein Beugungsgitter erzeugt werden, wobei dies im Gegensatz zur Beugungsgittererzeugung in festen Kristallen nicht über die Bildung eines eletrischen Feldes. sondern durch andere optische Effekte erfolgt.

Bei einer Einrichtung mit einem festen Kristall können aus kohärentem Licht bestehende Schreib- und Lese-Lichtbündel und eventuell noch ein aus inkohärentem Licht bestehendes Modulations-Lichtbündel unter einem Winkel, und zwar beispielsweise unter einem rechten Winkel zur kristallinen c-Achse in dem Kristall eingestrahlt werden. Bei Verwendung eines Flüssigkristalls können die genannten Lichtbündel unter einem Winkel. beispielsweise einem rechten Winkel zur Direktor-Richtung des Flüssigkristalls in diesen eingestrahlt werden.

Die Erfindung betrifft ferner ein Verfahren zum Reduzieren von Ionen in einem festen Kristall zur Bildung eines lichtdurchlässigen Körpers für die Durchführung des Verfahrens und/oder für die Einrichtung. Dieses Verfahren ist erfindungsgemäss durch den kennzeichnenden Teil des Anspruchs 10 gekennzeichnet.

Die Erfindung soll nun anhand der in der Zeichnung dargestellter Ausführungsbeispiele erläutert werden. In der Zeichnung zeigt

die Figur 1 das bereits in der Einleitung erwähnte Diagramm,

die Figur 2 eine schematisierte Draufsicht auf eine Einrichtung zur Veränderung des Ablenkwinkels des gebeugten Lese-Lichtbündels in einem lichtdurchlässigen Körper,

die Figur 3 eine schematisierte Draufsicht auf sich im Innern des lichtdurchlässigen Körpers befindende Teile von Lichtbündeln.

4

die Figur 4 eine schematisierte Schrägansicht des lichtdurchlässigen Körpers,

die Figur 5 ein Diagramm mit dem experimentell ermittelten Verlauf der Bragg-Winkel des einfallenden und des abgebeugten Lese-Lichtbündels in Abhängigkeit von der normalisierten Wellenzahl des Gittervektors,

die Figur 6 ein Diagramm mit einem Schnitt durch die zweischalige Wellenvektorfläche und mit den Wellenvektoren des Beugungsgitters und des eingestrahlten sowie des abgebeugten Lese-Lichtbündels bei anisotroper Beugung für den Fall, dass die vom Gittervektor aufgespannte Gerade eine Tangente an die innere Schale der zweischaligen Wellenvektorfläche bildet,

die Figur 7 ein Diagramm mit dem Verlauf des relativen Beugungswirkungsgrades in Abhängigkeit von der Richtung des abgebeugten Lese-Lichtbündels für den Fall, dass die vom Gittervektor aufgespannte Gerade gemäss der Figur 6 verläuft,

die Figur 8 ein der Figur 6 entsprechendes Diagramm, aber für den Fall, dass die vom Gittervektor aufgespannte Gerade eine Sekante der inneren Schnittlinie der Wellenvektorfläche bildet,

die Figur 9 ein der Figur 7 entsprechendes Diagramm für die schematisch in der Figur 8 dargestellte Lage der vom Gittervektor aufgespannten Geraden,

die Figur 10 eine schematisierte Draufsicht auf eine Einrichtung zur räumlichen Modulation eines kohärenten Lese-Lichtbündels mit einem inkohärenten Modulations-Lichtbündel,

die Figur 11 eine schematisierte Draufsicht auf eine Variante einer Einrichtung zur räumlichen Modulation eines kohärenten Lichtbündels,

die Figur 12 ein Diagramm mit einem Schnitt durch die zweischalige Wellenvektorfläche und mit verschiedenen Wellenvektoren zur Veranschaulichung der Funktion der in der Figur 11 dargestellten Einrichtung,

die Figur 13 eine schematisierte Draufsicht auf eine andere Variante einer Einrichtung zur räumlichen Modulation eines Lichtbündels,

die Figur 14 ein der Figur 12 entsprechendes Diagramm zur Veranschaulichung der Funktion der Einrichtung gemäss der Figur 13 und

die Figur 15 einen schematisierten Schnitt durch eine Vorrichtung zum Reduzieren in einem zur Bildung des lichtdurchlässigen Körpers dienenden Kristall vorhandener Ionen.

Die in der Figur 2 dargestellte Einrichtung zur durch Licht veränderbaren Lichtbeugung und zur zeitabhängig veränderbaren Lichtablenkung weist ein nicht gezeichnetes Gestell auf, an dem mit ebenfalls nicht gezeichneten Halterungsmitteln ein als Licht-Deflektor dienender Körper 11 starr und beispielsweise mit verschiedenen Verstell-Freiheitsgraden verstellbar befestigt ist. Der Körper 11 besteht aus einem lichtdurchlässigen, photorefraktiven, festen, kristallinen Material, nämlich einem Einkristall, und ist optisch anisotrop, d.h. doppelbrechend. Der Körper 11 besteht im vorliegenden Fall aus dem optisch zweiachsigen Kaliumniobat, $KNbO_3$ und enthält noch Spuren von Eisen. Während reines Kaliumniobat farblos und glasklar ist, kann das den Körper 11 bildende Material in Abhängigkeit vom Eisengehalt und von allfälligen anderen vorhandenen Spuren-Komponenten eine farbliche Tönung haben. Der Körper 11 besteht aus einem quaderförmigen Plättchen und hat auf einander abgewandten Seiten zwei ebene, zueinander parallele, polierte Grenzflächen 11a und 11b, wobei auch die anderen, paarweise zueinander parallelen Grenzflächen vorzugsweise poliert sind.

Eine Schreib-Lichtquelle 15 zur Erzeugung von kohärentem Licht weist einen Laser 17, nämlich einen Argon-Laser, mit Mitteln zum Festlegen einer beispielsweise elektrisch wählbaren Lichtfrequenz bzw. -wellenlänge und eine Lichtbündel-Aufweitungsvorrichtung 19 mit Linsen auf. Zur Einrichtung gehören ferner ein durch einen halbdurchsichtigen Spiegel gebildeter Lichtbündel-Teiler 21, zwei Spiegel 23, eine Lese-Lichtquelle 31 mit einem Laser, nämlich einem Helium-Neon-Laser, und eine Licht-Auffangvorrichtung 33. Diese kann beispielsweise zwei oder mehr Lichtauffänger 35 aufweisen, die etwa je aus einer Blende und/oder einer Linse gebildet und lichtmässig mit einem Ende eines Lichtwellenleiters 37 verbunden sind. Die Teile 15, 17, 19, 21, 23, 31, 33 sind starr und vorzugsweise mindestens zum Teil verstellbar und justierbar am bereits erwähnten Gestell befestigt.

Die Schreib-Lichtquelle 15 erzeugt beim Betrieb ein kohärentes, linear polarisiertes Lichtbündel 41, das mit der Aufweitungsvorrichtung 19 aufgeweitet und mit dem Lichtbündel-Teiler 19 in zwei Lichtbündel aufgeteilt wird, die mit den Spiegeln 23 umgelenkt und als Schreib-Lichtbündel 43, 45 gegen die Grenzfläche 11a und durch diese hindurch in den Körper 11 eingestrahlt werden. Die beiden Schreib-Lichtbündel 43, 45 bestehen je aus zumindest annähernd und vorzugsweise vollkommen parallelen Strahlen und bilden dementsprechend mindestens annähernd und vorzugsweise vollkommen ebene Wellen, von denen in der Figur 3 die Wellenberge angedeutet sind. Die beiden miteinander einen Winkel bildenden Schreib-Lichtbündel 43, 45 werden an der Grenzfläche 11a gebrochen, kreuzen einander im Körper 11 und interferieren dabei in der in der Figur 3 veranschaulichten Weise miteinander. Dadurch entsteht im Körper 11 eine stehende, zumindest annähernd und vorzugsweise vollkommen ebene Welle. Diese erzeugt durch elektro-optische Einwirkungen, insbesondere den linearen, elektro-optischen Effekt, der auch als Pockelseffekt bezeichnet wird, im Körper 11 ein Beugungsgitter 51 mit den Gitterebenen 53. Diese können durch Ebenen gleicher Phasenlage der stehenden Welle, beispielsweise durch die von den Wellenbergen der stehenden Welle aufgespannten Ebenen, gebildet sein.

Die Lese-Lichtquelle 31 erzeugt ein kohärentes, linear polarisiertes Lese-Lichtbündel 55, das aus zumindest annähernd und vorzugsweise vollkommen zu einander parallelen Strahlen besteht. Das Lese-Lichtbündel 55

wird wie die Schreib-Lichtbündel 43, 45 durch die Grenzfläche 11a hindurch in den Körper 11 eingestrahlt und an dieser gebrochen. Die Einstrahlungsrichtungen und Querschnittsabmessungen der Lichtbündel 43, 45, 55 sind derart festgelegt, dass sich das Beugungsgitter 51 zumindest über einen Teil des Raumbereichs und vorzugsweise über den ganzen Raumbereich erstreckt, in den das Lese-Lichtbündel 55 im Körper 11 gelangt. Die Querschnittsabmessungen der beiden Schreib-Lichtbündel 43, 45 können beispielsweise derart bemessen sein, dass die Schreib-Lichtbündel im ganzen Körper 11 miteinander interferieren und ein Beugungsgitter erzeugen. Das Lese-Lichtbündel 35 hat kleinere Querschnittsabmessungen als die Schreib-Lichtbündel 43, 45 und ist möglichst dünn und strahlartig. Es sei noch darauf hingewiesen, dass der Körper 11 in der Figur 2 im Vergleich zur Grösse verschiedener anderer Einrichtungsteile, insbesondere der zum Aufweiten und Einstrahlen der Schreib-Lichtbündel dienenden Teile, in stark übertriebener Grösse gezeichnet ist. Die entlang den Kanten der beiden Grenzflächen 11a, 11b gemessenen Abmessungen des Körpers 11 können beispielsweise etwa 5 bis 15 mm betragen. Die rechtwinklig zu den Grenzflächen 11a, 11b gemessene Körper-Abmessung ist zur Erzielung einer "scharfen Abbildung" vorzugsweise kleiner und beträgt beispielsweise etwa 1 bis 3 mm. Der sich im Innern des Körpers 11 befindende Teil des eingestrahlten Lese-Lichtbündels 55 wird am Beugungsgitter 51 durch Bragg-Beugung abgelenkt. Dadurch entsteht ein abgebeugtes Lese-Lichtbündel 57, das durch die Grenzfläche 11b hindurch aus dem Körper 11 austritt und dabei gebrochen und abgelenkt wird. Der Vollständigkeit halber sei bemerkt, dass ein Teil des eingestrahlten Lese-Lichtbündel 55 ungebeugt durch den Körper 11 hindurchlaufen kann, wobei dieser nicht benötigte und nicht dargestellte Lichtbündel-Teil eventuell bei seiner Austrittstelle durch am Körper 11 angeordnete Abdeckungen absorbiert werden kann.

Durch Verändern der Frequenz und Wellenlängen des Schreib-Lichts kann der Abstand der Gitterebenen 53 und damit beim Beugungsvorgang die Ablenkung des Lese-Lichtbündels geändert werden. Wenn man beispielsweise mit der Schreib-Lichtquelle wahlweise Licht mit einer von drei verschiedenen Frequenzen und Wellenlängen erzeugt, wird das abgelenkte Lese-Lichtbündel 57 je nach der gewählten Frequenz wahlweise zu einem der drei Licht-Auffänger 35 gestrahlt, so dass die Einrichtung gewissermassen einen optisch steuerbaren optischen Umschalter mit drei Schaltstellungen bildet.

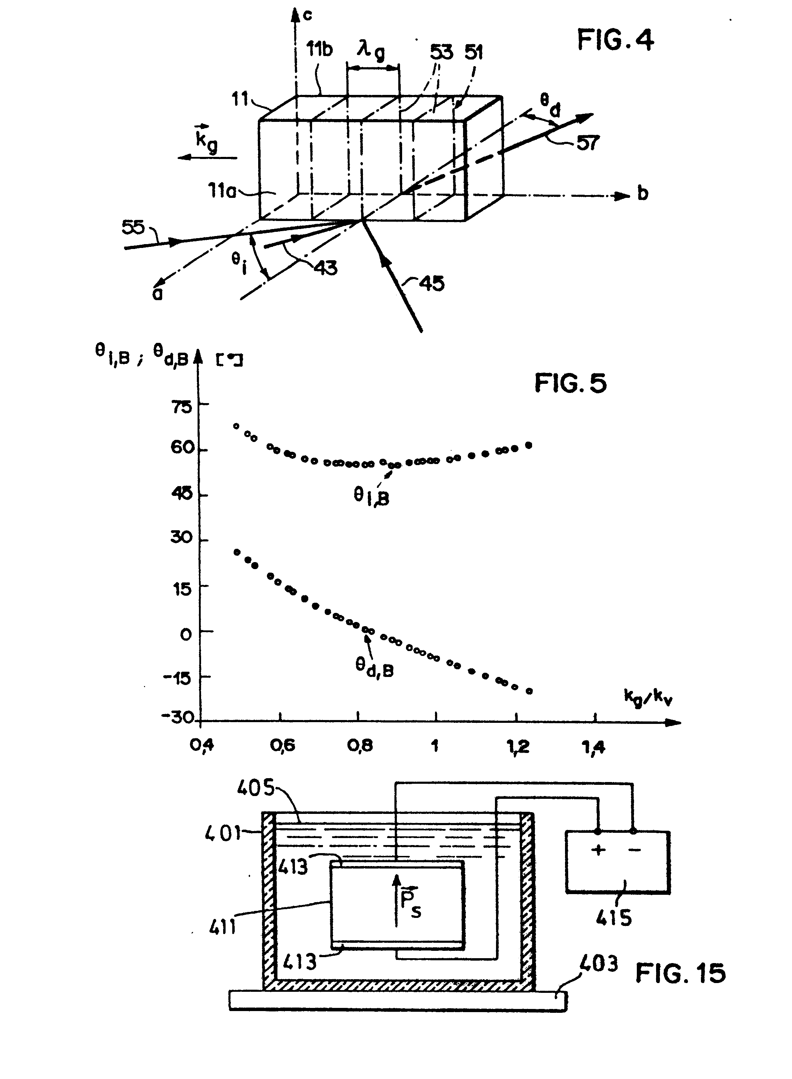

Der beispielsweise den Körper 11 bildende Kaliumniobat-Kristall hat bei Raumtemperatur eine zum orthorombischen Kristallsystem gehörende Struktur der Klasse mm2 und ist dementsprechend optisch zweiachsig. In der Figur 4 sind nebst einer schematischen Schrägansicht des Körpers 11 noch dessen kristallographische Symmetrieachsen, nämlich die a-, b- und c-Achse eingezeichnet, die bei der vorliegenden orthorombischen Struktur mit den optischen Symmetrieachsen zusammenfallen und paarweise rechtwinklig zueinander verlaufen. Die beiden Grenzflächen 11a, 11b sind rechtwinklig zur a-Achse und parallel zur b- sowie c-Achse.

Die beiden Schreib-Lichtbündel 43, 45 werden entlang einer zur c-Achse rechtwinkligen und zur a- sowie b-Achse parallelen Ebene gegen die Grenzfläche 11a gestrahlt und haben sowohl vor dem Eindringen in den Körper 11 als auch in diesem zueinander parallele, beispielsweise zur Zeichnungsebene der Figuren 2 und 3 rechtwinklige Polarisationen, was durch bei den beiden Lichtbündeln angebrachte Kreise angedeutet ist. Die beiden Schreib-Lichtbündel 43, 45 sind zudem spiegelsymmetrisch zu einer zwischen ihnen vorhandenen, zur b-Achse rechtwinkligen, zu den Gitterebenen parallelen und zur Grenzfläche 11a rechtwinkligen Ebene und bilden mit dieser vor dem Eindringen in den Körper 11 je den Winkel $\alpha$ und nach erfolgter Brechung an der Grenzfläche 11a im Innern des Körpers 11 den Winkel $\beta$.

Das Lese-Lichtbündel 55 verläuft entlang der gleichen Ebene wie die beiden Schreib-Lichtbündel 43, 45 und hat sowohl vor dem Eindringen in den Körper 11 als auch in diesem eine zu dieser, zur a- und b-Achse parallelen Ebene parallele Polarisation, wie es in den Figuren 2 und 3 durch einen das Lese-Lichtbündel 55 kreuzenden Pfeil angedeutet ist. Der sich auf der Aussenseite der Grenzfläche 11a befindende Teil des gegen den Körper 11 gestrahlten Lese-Lichtbündels 55 bildet mit einer zu den Gitterebenen parallelen und zur Grenzfläche 11a rechtwinkligen Ebene den Winkel $\theta_i$. Der durch Beugung an der Grenzfläche 11a abgelenkte, sich im Inneren des Körpers 11 befindende Teil des eingestrahlten Lese-Lichtbündels 55 bildet mit der genannte Ebene den Winkel $\psi_i$.

Das abgebeugte Lese-Lichtbündel 57 hat im Körper 11 sowie nach dem Austritt aus diesem eine zu der von der a- und b-Achse aufgespannten Ebene rechtwinklige Polarisation, wie es in den Figuren 2 und 3 durch Kreise angedeutet ist. Die Polarisation des abgebeugten Teils des Lese-Lichts wird also bei der Beugung bezüglich der von der a- und b-Achse aufgespannten, zum Gittervektor und zu den Mittelachsen des eingestrahlten und abgebeugten Lese-Lichtbündels parallelen Ebene gedreht. Der sich im Innern des Körpers 11 befindende Teil des durch Beugung entstehenden Lese-Lichtbündels 57 bildet mit einer zu den Gitterebenen 55 parallelen Ebene den Winkel $\psi_d$ und der sich ausserhalb des Körpers 11 befindende, an der Grenzfläche 11b gebrochene Teil des abgebeugten Lese-Lichtbündels 57 bildet mit der genannten Ebene den Winkel $\theta_d$. Es sei noch bemerkt, dass die Lese-Lichtbündel 55, 57 in der Figur 3 lediglich zur Erzielung einer übersichtlichen Darstellung ausserhalb des Beugungsgitters 51 gezeichnet wurden und dass der Beugungsvorgang selbstverständlich im Bereich des Beugungsgitters stattfindet.

Der den Laser 17 bildende Argon-Laser kann beispielsweise durch entsprechende Steuerung wahlweise Licht mit Vakuum-Wellenlängen von 488 nm, 501 nm und 515 nm erzeugen. Der die Lese-Lichtquelle 31 bildende Helium-Neon-Laser erzeugt Licht mit einer Vakuum-Wellenlänge $\lambda_v$ von 633 nm. Ferner seien der Winkel $\alpha$ 19.2, der Winkel $\beta$ 8.5, der Winkel $\theta_i$ 56.2 und der Winkel $\psi_i$ 21.0. Die sich in Abhängigkeit von der Vakuum-Wellenlänge des Schreib-Lichts ergebenden Winkel $\psi_d$ und $\theta_d$ des abgelenkten Lese-Lichtbün-

6

dels 57 sind in der folgenden Tabelle zusammengestellt:

| Vakuum-Wellenlänge des Schreib-Lichts | $\Psi_d$ | $\theta_d$ |
|---|---|---|
| 488 nm | -0,58° | -1,25° |
| 501 nm | 0° | 0° |
| 515 nm | +0,61° | +1,33° |

Nun sollen noch einige weitere Eigenschaften der anisotropen Beugung erörtert werden. Die von den beiden Schreib-Lichtbündeln 43, 45 im Körper 11 erzeugte, stehende Welle erzeugt im Körper 11 freie Ladungsträger, die ihrerseits ein örtlich variierendes, elektrisches Raumladungsfeld $\vec{E}(\vec{x})$ erzeugen. das wiederum über den linearen elektro-optischen Effekt, der auch als Pockels-Effekt bezeichnet wird, die optische Indikatrix ändert. Die Änderung der optischen Indikatrix kann dargestellt werden durch die Formel:

$$\Delta \left( \frac{1}{n^2} \right)_{ij} (\vec{x}) = r_{ijk} E_k(\vec{x}) \qquad (2)$$

In dieser ist $(\vec{x})$ ein Ortsvektor, der in einem bezüglich des Körpers 11 festen, kartesischen Koordinatensystem die Komponenten $x_1$, $x_2$, $x_3$ hat, wobei $x_1$ entlang der kristallographischen a-Achse, $x_2$ entlang der kristallographischen b-Achse und $x_3$ entlang der kristallographischen c-Achse gemessen wird. $E_k$ bezeichnet eine Komponente des in Abhängigkeit vom Ortsvektor variierenden, elektrischen Feldstärkevektors $\vec{E}$ des Raumladungsfeldes. Ferner bezeichnet

$$\Delta \left( \frac{1}{n^2} \right)_{ij}$$

ein Element eines Differenz-Tensors, um den die durch einen Tensor mit den Elementen

$$\left( \frac{1}{n^2} \right)_{ij}$$

dargestellte, optische Indikatrix des Körpers 11 durch die stehende Welle abhängig vom Ortsvektor verändert wird. Dabei ist in der Formel (2) in üblicher Weise über doppelt vorkommende Indizes zu summieren.

Die allgemeine Formel (2) gilt sowohl für die vorbekannte isotrope Beugung als auch für die erfindungsgemässe, anisotrope Beugung. Wenn nun die Schreib-Lichtbündel 43, 45 für die Erzeugung einer anisotropen Beugung gemäss den Figuren 2 bis 4 derart in den Körper 11 eingestrahlt werden, dass der die stehende Welle und das Beugungsgitter charakterisierende Wellen- oder Gittervektor $\vec{k}_g$ parallel zur b-Achse ist, so ist auch das durch die photoelektrische Wirkung erzeugte Raumladungsfeld zur b-Achse parallel und hat eine entlang von dieser beispielsweise mit einer Sinusfunktion variierende Feldstärke E. Die Formel (2) ergibt in diesem Fall:

$$\Delta \left( \frac{1}{n^2} \right)_{32} (x_2) = 2r_{322} E \sin(k_g x_2) \qquad (3)$$

Dies bedeutet, dass in dem die optische Indikatrix des Körpers 11 darstellenden Tensor ein nicht auf der Diagonale des Tensors liegendes, von der lokalen Feldstärke abhängiges Element erscheint und dass das die Indikatrix darstellende Ellipsoid entsprechend der am betreffenden Ort vorhandenen Feldstärke mehr oder

7

weniger stark deformiert und um die a-Achse gedreht wird. Ferner wird auch mindestens eine der Hauptbrechzahlen, d.h. die Länge von mindestens einem Halbmesser des die Indikatrix darstellenden Ellipsoids ortsabhängig verändert.

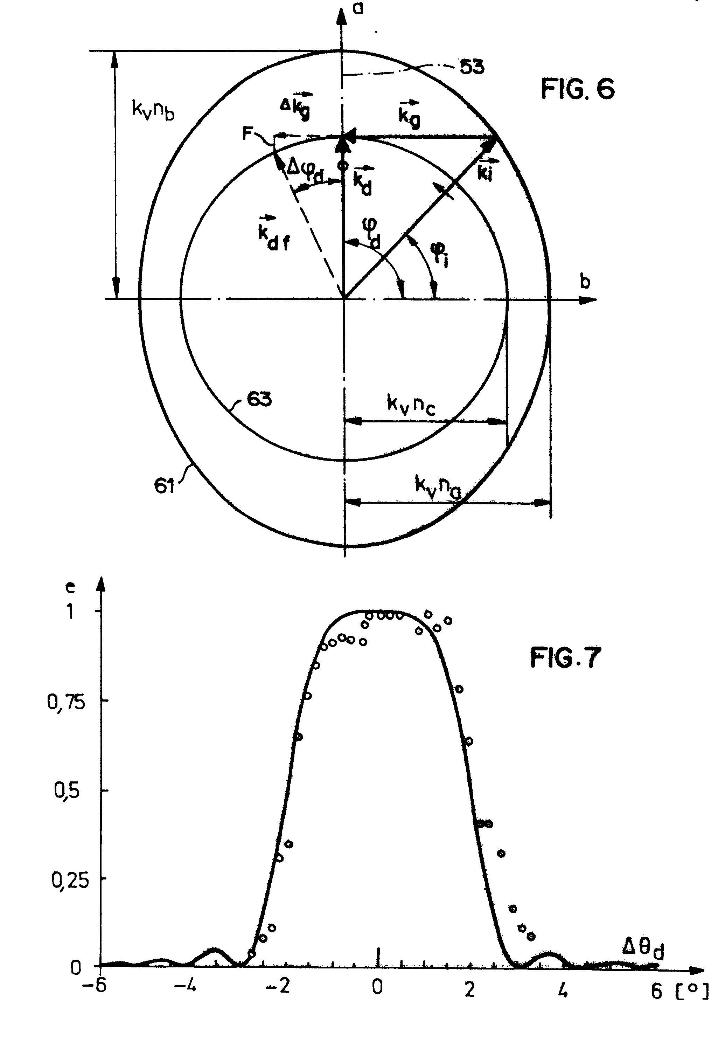

Das Licht des eingestrahlten Lese-Lichtbündels 55 und des am Beugungsgitter abgebeugten Lese-Lichtbündels 57 haben die gleiche Frequenz und die gleiche Vakuum-Wellenlänge $\lambda_v$. Ferner müssen die sich im Innern des Körpers 11 befindenden Teile der beiden Lichtbündel 55, 57 die in der Einleitung angegebene Gleichung (1) erfüllen. Die Beugung ist jetzt jedoch optisch anisotrop. In der Figur 5 ist auf der Abszisse das Verhältnis $k_g/k_v$ aufgetragen, wobei $k_v$ die Wellenzahl der Lese-Lichtbündel im Vakuum ist. Auf der Abszisse sind die Winkel $\theta_{i,B}$ und $\theta_{d,B}$ aufgetragen, bei denen es sich um diejenigen Werte der von den sich ausserhalb des Körpers 11 befindenden Teilen der Lese-Lichtbündel 55, 57 mit einer zu den Gitterebenen parallelen Ebene gebildeten Winkel $\theta_i$ bzw. $\theta_d$ handelt, für die die im Innern des Körpers 11 vorhandenen Teile der Lese-Lichtbündel 55, 57 die durch die Gleichung (1) definierte Bragg-Bedingung erfüllen. Die in der Figur 5 eingezeichneten Kreise bezeichnen experimentell ermittelte Werte für die beiden Winkel $\theta_{i,B}$ und $\theta_{d,B}$ Während die Messwerte $\theta_{d,B}$ mit wachsender Gittervektor-Wellenzahl $k_g$ eine stetig und monoton abnehmende Kurve bilden, hat die ebenfalls stetig ändernde, von den Messwerten $\theta_{i,B}$ gebildete Kurve ein Minimum. Im Bereich dieses Minimums ändert der Winkel $\theta_{i,B}$ beim Ändern der Wellenzahl $k_g$ des Gittervektors $\vec{k}_g$ nur relativ wenig. Die Verfahrensparameter werden beim Betrieb der in der Figur 2 dargestellten Einrichtung nun derart festgelegt, dass sich der Wert des Winkels $\theta_i$ beim Minimum der $\theta_{i,B}$-Messwertreihe bzw. -Kurve oder zumindest in der Nähe dieses Minimums befindet. Dabei kann beispielsweise vorgesehen werden, dass die Bragg-Bedingung genau erfüllt wird, wenn das abgelenkte Lese-Lichtbündel 57 auf den mittleren der drei Auffänger 35 fällt. Wenn nun zum Ändern der Ablenkung des Lese-Lichtbündels die Wellenzahl $k_g$ bei unveränderlichem Winkel $\theta_i$ geändert wird, weicht der Winkel $\theta_i$ nur verhältnismässig wenig von dem die Bragg-Bedingung erfüllenden Wert $\theta_{i,B}$ ab.

Nun soll anhand der Figur 6 noch von einem etwas anderen, mehr physikalischen Standpunkt her erläutert werden, wie durch günstige Festlegung der Betriebsparameter erreicht werden kann, dass beim Ablenken des Lese-Lichtbündels eine grosse Intensität erzielbar ist, ohne die Einstrahlungsrichtung des Lese-Lichtbündels 55 bezüglich des Beugungsgitters zu ändern.

Wenn die optische Indikatrix des Körpers 11 durch die von den Schreib-Lichtbündeln 43, 45 erzeugte, stehende Welle ortsabhängig deformiert und gedreht wird wird, bewirkt dies selbstverständlich auch eine örtlich variable Deformation und Drehung der zweischaligen Wellenvektorfläche. Wenn man durch die Wellenvektorfläche einen Schnitt entlang der von den drei Vektoren $\vec{k}_g$, $\vec{k}_i$, $\vec{k}_d$ aufgespannten Ebene legt, die im vorliegenden Fall parallel zu der von den kristallographischen Achsen a, b aufgespannten Ebene verläuft, schneiden die beiden Schalen der Wellenvektorfläche die Ebene bei den in der Figur 6 ersichtlichen Schnittlinien 61 bzw. 63. Dabei wurde beim Zeichnen der Figur 6 angenommen, dass die a-, die b- und die zur Zeichnungsebene rechtwinklige c-Achse durch den Mittelpunkt der zweischaligen Wellenvektorfläche verlaufen und dass die gezeichnete Schnittebene bei einer Stelle liegt, bei der die örtlich variable, elektrische Feldstärke verschwindet und die Wellenvektorfläche dementsprechend undeformiert sowie symmetrisch zu jeder kristallographischen Achse ist. Es sei hierbei bemerkt, dass die örtlich variablen Deformationen und Drehungen der Indikatrix und Wellenvektorfläche ohnehin nur gering sind. Die Drehungen können beispielsweise bei den Feldstärke-Maxima im Bereich von 0,5° bis 1° liegen. Die Gitterebenen 53 verlaufen selbstverständlich parallel zur a-Achse und rechtwinklig zur Zeichnungsebene der Figur 5, wobei angenommen wurde, dass eine der Gitterebenen gerade mit der a-Achse zusammenfällt. Die Schnittlinie 61 bildet den geometrischen Ort der Enden derjenigen Wellenvektoren, die einem Lichtbündel mit in der Zeichnungsebene liegender Polarisation zugeordnet sind, während die Schnittlinie 63 den geometrischen Ort der Enden von Wellenvektoren bildet, die Lichtbündeln mit zur Zeichnungsebene rechtwinkliger Polarisation zugeordnet sind. Der Wellenvektor $\vec{k}_i$ erstreckt sich dementsprechend vom Mittelpunkt der zweischaligen Wellenvektorfläche bis zur Schnittlinie 61 und der Wellenvektor $\vec{k}_d$ vom genannten Mittelpunkt bis zur Schnittlinie 63. Der dem sich im Innern des Körpers 11 befindenden Teil des eingestrahlten Lese-Lichtbündels 55 zugeordnete Wellenvektor $\vec{k}_i$ bildet mit der b-Achse den Winkel $\vartheta_i$ und der dem sich im Körper 11 befindenden Teil des abgebeugten Lese-Lichtbündels 57 zugeordnete Wellenvektor $\vec{k}_d$ bildet mit der b-Achse den Winkel $\vartheta_d$. wobei $\vartheta_i + \psi_i = \vartheta_d + \psi_d = 90°$ sind. Die Schnittlinie 61 umschliesst die Schnittlinie 63 und bildet eine Ellipse. Der parallel zur a-Achse gemessene Ellipsen-Halbmesser beträgt $k_v\, n_b$ und der parallel zur b-Achse gemessene Ellipsen-Halbmesser beträgt $k_v\, n_a$. Die innere Schnittlinie 63 bildet einen Kreis mit dem Radius $k_v\, n_c$. Dabei ist $k_v$. wie bereits weiter vorne erwähnt, die Wellenlänge der Lese-Lichtbündel im Vakuum. Ferner bezeichnen $n_a$, $n_b$, $n_c$ die drei Hauptbrechzahlen, die durch die zur a- bzw. b- bzw. c-Achse parallelen Halbmesser des Indikatrix-Ellipsoids dargestellt werden.

Die drei in der Figur 6 gezeichneten Vektoren $\vec{k}_i$, $\vec{k}_g$, $\vec{k}_d$ erfüllen die durch die Gleichung (1) gegebene Bragg-Bedingung für die Beugung, so dass der Anfang des Vektors $\vec{k}_g$ genau beim Ende des Vektors $\vec{k}_i$ und das Ende des Vektors $\vec{k}_g$ genau beim Ende des Vektors $\vec{k}_d$ liegt. Es sei hierbei bemerkt. dass die gezeichneten Vektoren den Fall betreffen. dass auf der rechten Seite der Gleichung (1) das positive Vorzeichen gilt. Bei umgekehrtem Gittervektor $\vec{k}_g$ wäre das negative Vorzeichen gültig. Die vom Wellen- oder Gittervektor $\vec{k}_g$ aufgespannte Gerade schmiegt sich bei den Enden der Vektoren $\vec{k}_g$ und $\vec{k}_d$ tangential an die einen Kreis bildende Schnittlinie 63 an und verläuft also rechtwinklig zum Wellenvektor $\vec{k}_d$.

Wenn man nun die Einstrahlungsrichtung des Lese-Lichtbündels unverändert beibehält und durch Ändern der Frequenz bzw. der Vakuum-Wellenlängen der beiden Schreib-Lichtbündel 43, 45 den Abstand der Gitterebenen 53 und damit die Wellenzahl $k_g$ ändert, wird dadurch die Richtung des Wellenvektors $\vec{k}_d$ und damit der Winkel $\vartheta_d$ verändert. Die durch die Gleichung (1) gegebene Bragg-Bedingung ist dann nicht mehr genau erfüllt. Zur Veranschaulichung dieses Sachverhalts wird angenommen, dass der Wellen- oder Gittervektor $\vec{k}_g$ um den Differenz-Vektor $\Delta\,\vec{k}_g$ verlängert wird. Im weiteren wird angenommen, das Ende des Vektors $\vec{k}_d$ folge der Änderung des Endes des Gittervektors, indem es sich entlang der Schnittlinie 63 verschiebt, so dass der Vektor $\vec{k}_d$ zum gestrichelt gezeichneten Vektor $\vec{k}_{d,f}$ wird. Dieser bildet mit den Gitterebenen 53 einen Winkel, der um den Differenzwinkel $\Delta\vartheta_d$ grösser ist als der die Bragg-Bedingung erfüllende Wert des Winkels $\vartheta_d$. Das Ende des um den Differenz-Vektor $\Delta\,\vec{k}_g$ verlängerten Vektors $\vec{k}_g$ fällt dann nicht mehr genau mit dem Ende des Vektors $\vec{k}_{d,f}$ zusammen, wobei die Differenz-Fehlerstrecke F zwischen den Enden der beiden Vektoren ($\vec{k}_g + \vec{k}_g$) und $\vec{k}_{d,f}$ ein Mass für die Abweichung von der Bragg-Bedingung gibt. Wegen der tangentialen Anschmiegung der vom Gittervektor $\vec{k}_g$ aufgespannten Geraden an die Schnittlinie 63 ist die Fehlerstrecke jedoch relativ klein, so lange die Länge des Differenz-Vektors $\Delta\,\vec{k}_g$ im Vergleich zur Länge des die Bragg-Bedingung erfüllenden Gittervektors nicht allzu gross ist. Die sich ergebende Fehlerstrecke F wird insbesondere wesentlich kleiner als die sich bei den vorbekannten, mit isotroper Beugung arbeitenden, durch die Figur 1 veranschaulichten Verfahren bei prozentual gleicher Abweichung der Länge des Gittervektors vom die Bragg-Bedingung erfüllenden Gittervektor ergebende Fehlerstrecke.

In der Figur 7 ist die Abhängigkeit des Beugungswirkungsgrades e vom Differenzwinkel $\Delta\,\theta_d$ dargestellt, um den der Winkel $\theta_d$ von seinem vorgesehenen Mittelwert abweicht, der in diesem Fall mit dem die Bragg-Bedingung erfüllenden Wert $\theta_{d,B}$ des Winkels $\theta_d$ identisch ist. Der Beugungswirkungsgrad e gibt ein Mass für die Intensität des aus dem Körper 11 herausgestrahlten Teils des abgebeugten Lese-Lichtbündels 57, wobei die Einheit derart gewählt wurde, dass sich für das Maximum der Wert 1 ergibt. In der Figur 7 sind sowohl Messwerte be zeichnende Kreise als auch eine aufgrund der Theorie berechnete Kurve eingezeichnet. Für die Versuche wurde ein Kaliumniobat-Einkristall mit einer parallel zur a-Achse gemessenen Dicke von 2,52 mm verwendet, dessen Absorptionskoeffizient für Licht mit einer Vakuum-Wellenlänge von 488 nm den Wert 1 cm$^{-1}$ hat. Das Beugungsgitter wurde mit Schreib-Lichtbündeln gebildet, die aus der 488 nm- Linie des Argon-Lasers erzeugt wurden. Die Änderung der Wellenzahl $k_g$ erfolgte dabei durch Ändern der Einstrahlungsrichtung der Schreib-Lichtbündel, d.h. durch Ändern der Winkel $\alpha$ und $\beta$. Die Verfahrensparameter wurden dabei gemäss der Figur 6 derart festgelegt, dass die Bragg-Bedingung genau erfüllt ist, wenn sich das Ende des Gittervektors $\vec{k}_g$ tangential an die Schnittlinie 61 anschmiegt und der Wellenvektor $\vec{k}_d$ rechtwinklig zu $\vec{k}_g$ verläuft. Der Winkel $\vartheta_i$, den das eingestrahlte Lese-Lichtbündel im Innern des Körpers 11 mit der b-Achse bildet, betrug 69,025°. Wie die berechnete Kurve und die Messwerte zeigen, kann der Winkel $\theta_d$ bis etwa $\pm\,3°$ vom die Bragg-Bedingung erfüllenden Winkel $\theta_{d,B}$ abweichen, bis der Beugungswirkungsgrad auf Null abfällt. Wie schon in der Einleitung erwähnt, fällt der Beugungswirkungsgrad bei der vorbekannten, isotropen Beugung schon auf Null ab, wenn der Winkel $\vartheta_d$ bzw. $\theta_d$ nur etwa 0.2° vom betreffenden, die Bragg- Bedingung erfüllenden Winkel abweicht. Im gemäss der Figur 7 ausnutzbaren Winkelbereich kann man beispielsweise etwa 550 verschiedene Richtungen des abgebeugten Lese-Lichtbündels auflösen und also einen optischen Umschalter mit 550 verschiedenen Schaltstellungen herstellen.

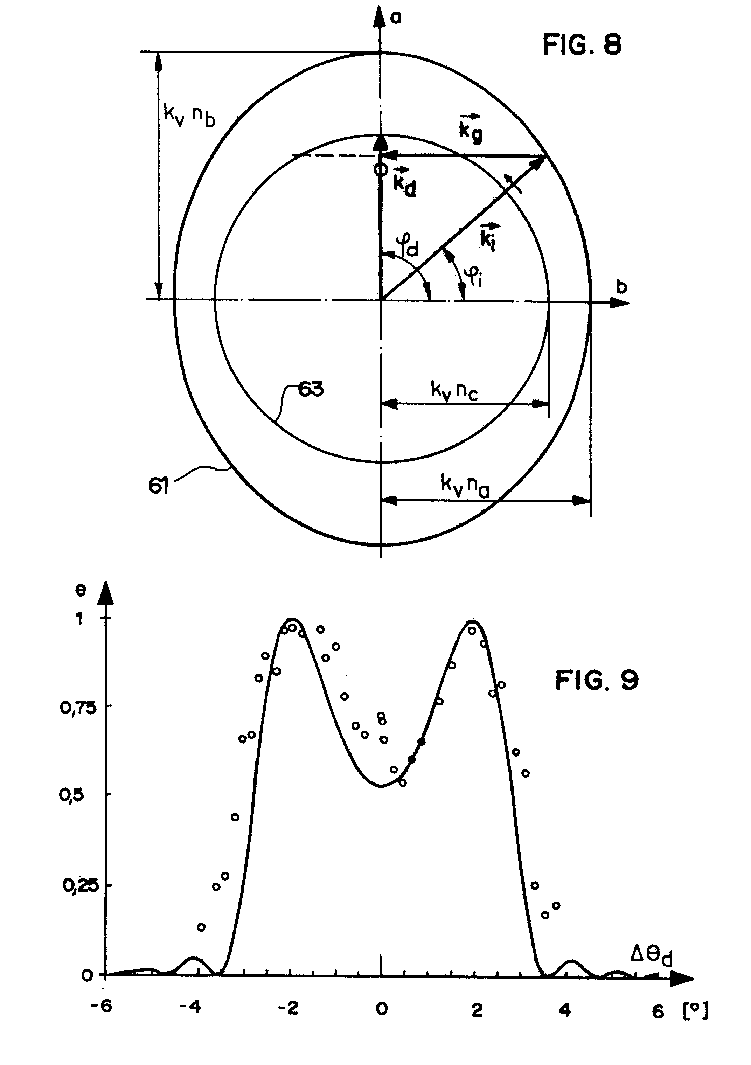

In der Figur 8 sind gleich wie in der Figur 6 die Schnittlinien 61, 63 und die Vektoren $\vec{k}_i$, $\vec{k}_g$, $\vec{k}_d$ dargestellt. Beim durch die Figur 8 veranschaulichten Verfahren ist jedoch der Winkel $\vartheta_i$ ein wenig kleiner als beim in der Figur 6 veranschaulichten Verfahren, so dass die vom Vektor $\vec{k}_g$ aufgespannte Gerade die kreisförmige Schnittlinie 63 durchdringt und zu dieser eine Sekante bildet. Der Gittervektor $\vec{k}_g$ endet daher bei der vorgesehenen, mittleren Richtung des abgebeugten Lese-Lichtbündels nicht auf der Schnittlinie 63, sondern ein wenig im Innern des von dieser begrenzten Kreises auf der a-Achse.

Die Figur 9 zeigt ein der Figur 7 entsprechendes Diagramm, in dem die Abhängigkeit des Beugungswirkungsgrades e vom Differenzwinkel $\Delta\,\theta_d$ für den Fall dargestellt ist, dass $\vartheta_i$ 69,007° beträgt und also um 0,018° kleiner ist als im in den Figuren 6 und 7 dargestellten Fall. Beim Verfahren gemäss den Figuren 8 und 9 ist die Bragg-Bedingung für diejenigen zwei Längen des Gittervektors $\vec{k}_g$ erfüllt, bei denen das Ende des Gittervektors $\vec{k}_g$ auf der einen oder anderen Seite der a-Achse auf der Schnittlinie 63 liegt. Der Beugungswirkungsgrad hat dementsprechend bei zwei die Bragg-Bedingung erfüllenden Werten des Winkels $\theta_d$ bzw. des in der Figur 9 auf der Abszisse aufgetragenen Differenzwinkels $\Delta\,\theta_d$ ein Maximum und dazwischen ein relatives Minimum. Gemäss der Figur 9 fällt der Beugungswirkungsgrad in diesem Fall erst bei etwas mehr als $\pm\,3,5°$ betragenden Differenzwinkeln $\Delta\,\theta_d$ auf Null ab, so dass also der ausnutzbare Winkelbereich noch grösser wird als beim durch die Figuren 6 und 7 veranschaulichten Verfahren.

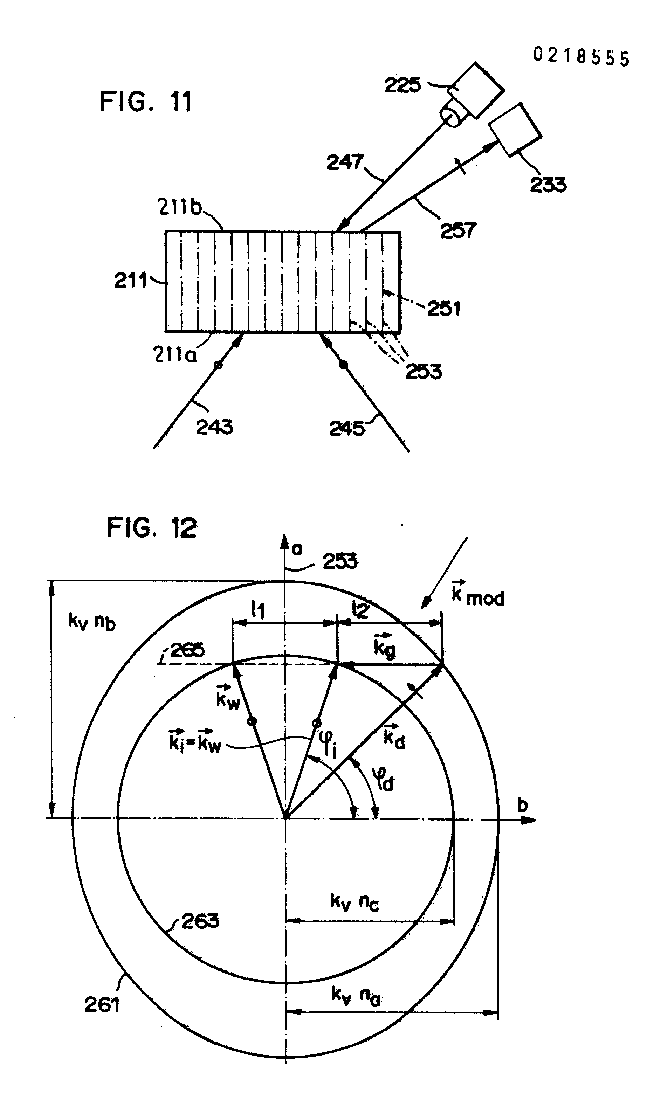

Die in der Figur 10 dargestellte, zur räumlichen Modulation von Licht dienende Einrichtung weist einen lichtdurchlässigen, kristallinen, doppelbrechenden, photorefraktiven beispielsweise aus Kaliumniobat bestehenden Körper 111 mit zwei ebenen, zu einander parallelen Grenzflächen 111a, 111b auf. In den Körper 111 werden durch die Grenzfläche 111a hindurch mit Mitteln, die ähnlich ausgebildet sein können wie bei der in der Figur 2 dargestellten Einrichtung zwei miteinander einen Winkel bildende Schreib-Lichtbündel 143, 145 eingestrahlt, so dass im Körper 111 ein Beugungsgitter 151 mit Gitterebenen 153 entsteht. Die Einrichtung weist ferner eine Modulator-Lichtquelle 125 auf, die beispielsweise aus einem Lichtbildprojektionsapparat besteht und ein inkohärentes Modulations-Lichtbündel 147 durch die Grenzfläche 111a hindurch in den Körper einstrahlt. Ferner wird mit einer Lichtquelle 131 ein kohärentes, linear polarisiertes Lese-Lichtbündel 155 durch die Grenzfläche 111a hindurch in den Körper 111 hineingestrahlt, in diesem durch Beugung am Beugungsgitter 153 abgebeugt und als abgebeugtes oder abgelenktes Lese-Lichtbündel 157 gegen eine Licht-Auffangvorrichtung 133 gestrahlt. Der Körper 111 ist quaderförmig und kann parallel zu den Rändern der beiden Grenzflächen 111a, 111b gemessen ähnlich wie der Körper 11 im Bereich von 5 bis 15 mm liegende Abmessungen haben. Dagegen ist die rechtwinklig zu den Grenzflächen 111a, 111b gemessene Dicke des Körpers 111 vorzugsweise grösser als die Dicke des Körpers 11 und beträgt beispielsweise mindestens 5 mm.

Die zur Erzeugung des Lese-Lichtbündels 155 dienende Lese-Lichtquelle 131 weist gleich wie die Lese-Lichtquelle 31 einen Laser 127 und zusätzlich gleich wie die Schreib-Lichtquelle noch eine Lichtbündel-Aufweitungsvorrichtung 129 auf. Das von der Modulator-Lichtquelle 125 erzeugte Modulations-Lichtbündel 147 soll ebenfalls verhältnismässig grosse Querschnittsabmessungen haben, so dass alle in den Körper 111 eingestrahlten Lichtbündel 143, 145, 147, 155 einen verhältnismässig grossen Bereich des Körpers 111 und beispielsweise den ganzen Körper 111 durchdringen und "ausfüllen". Die Richtungen der Schreib- und Lese-Lichtbündel und die Polarisationen dieser Lichtbündel können bezüglich des Körpers 111 und dessen kristallographischen Achsen ähnlich festgelegt sein, wie es für den Körper 11 erläutert worden ist. Das Modulations-Lichtbündel 147 wird parallel zu den Gitterebenen 153 sowie beispielsweise parallel zu der von den Schreib-Lichtbündeln aufgespannten Ebene in den Körper 111 eingestrahlt, so dass der ihm zugeordnete Wellenvektor im Innern des Körpers 111 rechtwinklig zum Gittervektor $\vec{k}_g$ und entlang einer zu diesem und zu den dem eingestrahlten und abgebeugten Lese-Lichtbündel zugeordneten Wellenvektoren $\vec{k}_i$, $\vec{k}_d$ parallelen Ebene verläuft. Das ein Bild darstellende Modulations-Licht bündel 147 bewirkt eine ortsabhängig ändernde Beleuchtung von mindestens einem Bereich des Körpers 111 und dadurch eine räumliche Modulation des Beugungsgitters 151. Bei dieser Modulation wird die Länge und/oder eventuell die Richtung des Gittervektors $\vec{k}_g$ ortsabhängig verändert. Die Modulation des Beugungsgitters wird beim Beugungsvorgang auf das abgebeugte Lese-Lichtbündel 157 übertragen, so dass dieses immer noch aus kohärentem Licht besteht, aber räumlich moduliert ist. Der aus dem Körper 111 heraus gelangende Teil des abgebeugten Lese-Lichtbündels 157 besteht dann aus divergierenden oder vorzugsweise zumindest annähernd und eventuell sogar genau parallelen Lichtstrahlen, deren Intensität über dem Querschnitt des Lichtbündels 157 variiert. Mit der Einrichtung kann also ein durch ein inkohärentes Lichtbündel dargestelltes Bild auf ein kohärentes Lichtbündel aufmoduliert und dadurch ein durch inkohärentes Licht dargestelltes Bild in ein durch kohärentes Licht dargestelltes Bild umgewandelt werden. Die Licht-Auffangvorrichtung 133 kann in diesem Fall beispielsweise durch einen Lichtverstärker, eine Bildspeichervorrichtung oder sonst eine Vorrichtung zur Verarbeitung und/oder Anzeige durch Licht dargestellter Informationen oder einen Teil einer solchen Vorrichtung gebildet sein.

Die Betriebsparameter können dabei beispielsweise derart festgelegt werden, dass die Enden der Vektoren $\vec{k}_g$, $\vec{k}_i$ und $\vec{k}_d$ bei Abwesenheit eines Modulations-Lichtbündels oder bei einem bestimmten Modulationszustand etwa die in der Figur 6 oder die in der Figur 8 dargestellten Lagen haben. Die durch die Modulation verursachten, lokalen Änderungen des Gittervektors haben dann nur geringe Abweichungen von der Bragg-Bedingung zur Folge. Dementsprechend erfolgt die Modulation bzw. Umwandlung eines durch inkohärentes Licht dargestellten Bildes in ein durch kohärentes Licht dargestelltes Bild mit verhältnismässig grossem und relativ wenig von der Modulation abhängigem Wirkungsgrad, so dass das abgebeugte, modulierte Lese-Lichtbündel 157 ein getreues Abbild des vom inkohärentem Modulations-Lichtbündel 147 oder zumindest dessen dargestellten Bildes gibt. Da das inkohärente Modulations-Lichtbündel 147 oder zumindest dessen Mittelachse die Grenzfläche 111a rechtwinklig durchdringt, liegt das durch das Modulations-Lichtbündel 147 dargestellte Bild im Körper 111 in einer zu dessen Grenzflächen 111a, 111b parallelen und zu den übrigen Grenzflächen des Körpers 111 rechtwinkligen Ebene. Zudem kann durch geeignete Festlegung der Verfahrensparameter erreicht werden, dass das abgebeugte und modulierte Lese-Lichtbündel 157 oder zumindest dessen Mittelachse die Grenzfläche 111b zumindest annähernd und vorzugsweise genau rechtwinklig durchdringt. Dadurch kann beim Modulationsvorgang zumindest weitgehend vermieden werden, dass Fehler durch ungleichmässige Absorption oder Dispersion entstehen. Im übrigen kann das durch das Modulations-Lichtbündel 147 dargestellte Bild im Lauf der Zeit verändert werden, so dass zusätzlich zur räumlichen, ortsabhängigen Modulation gewissermassen noch eine zeitliche, d.h. zeitabhängige Modulation stattfindet.

Die in der Figur 11 dargestellte, ebenfalls zur räumlichen und eventuell zeitlichen Licht-Modulation dienende Einrichtung weist einen lichtdurchlässigen, kristallinen, doppelbrechenden, photorefraktiven, quaderförmigen Körper 211 mit zwei ebenen, zueinander parallelen Grenzflächen 211a, 211b auf. In den Körper 211 werden durch die Grenzfläche 211a hindurch zwei kohärente Schreib-Lichtbündel 243, 245 eingestrahlt, die mit ähnlichen Mitteln erzeugt werden können wie bei der in der Figur 2 dargestellten Einrichtung und im Körper 211 ein Beugungsgitter 251 mit Gitterebenen 253 erzeugen. Unter gewissen, noch näher erläuterten Voraussetzungen kann mindestens eines der beiden Schreib-Lichtbündel am teilweise von ihm selbst erzeugten Beugungsgitter abgebeugt werden, so dass also eine Selbstbeugung von mindestens einem der beiden Schreib-Lichtbündel stattfindet. Dies ist mindestens für das Lichtbündel 243 der Fall, so dass es gleichzeitig ein Lese-Lichtbündel bildet. Mit einer Modulator-Lichtquelle 225 wird ein inkohärentes Modulations-Lichtbündel 247 erzeugt und beispielsweise durch die Grenzfläche 211b hindurch in den Körper 211 eingestrahlt, so dass das Modulations-Lichtbündel das Beugungsgitter 251 ortsabhängig moduliert. Aus dem Schreib/Lese-Lichtbündel 243 wird durch Beugung am Beugungsgitter ein abgebeugtes, moduliertes Lese-Lichtbündel 257 erzeugt, das den Körper 211 durch die Grenzfläche 211b verlässt und zu einer Licht-Auffangvorrichtung 233 gelangt.

Die Figur 12 zeigt einen Schnitt durch die sich beim Betrieb der in der Figur 11 dargestellten Einrichtung ergebende, zweischalige Wellenvektorfläche entlang der von der a- und b-Achse aufgespannten Ebene. Die Schnittebene schneidet die Wellenvektorfläche entlang der äusseren, ellipsenförmigen Schnittlinie 261 und der inneren, kreisförmigen Schnittlinie 263. Den sich im Innern des Körpers 211 befindenden Teilen der beiden Schreib-Lichtbündel 243, 245 sind Wellenvektoren $\vec{k}_w$ zugeordnet, von denen der zum Lichtbündel 243 gehörende auch den Wellenvektor $\vec{k}_i$ bildet. Die beiden Schreib-Lichtbündel 243, 245 sind parallel zur c-Achse linear polarisiert und die beiden Vektoren $\vec{k}_w$ verlaufen dementsprechend vom Mittelpunkt der zweischaligen Wellenvektorfläche zur inneren Schnittlinie 263. Durch die Enden der beiden Vektoren $\vec{k}_w$ und $\vec{k}_i = \vec{k}_w$ verläuft eine Gerade 265, die parallel zur b-Achse ist, eine Sekante zur inneren Schnittlinie 263 bildet und natürlich auch die äussere Schnittlinie 261 in zwei Punkten schneidet. Die Enden der beiden Vektoren $\vec{k}_w$ und $\vec{k}_i = \vec{k}_w$ haben von einander den Abstand $l_1$. Das Ende des Vektors $\vec{k}_i = w$ hat vom sich näher bei ihm befindenden Schnittpunkt der Geraden 265 mit der äusseren Schnittlinie 261 den Abstand $l_2$. Die Verfahrensparameter sind derart festgelegt, dass $l_2$ gleich $l_1$ und die Länge oder Wellenzahl $k_g$ des auf der Geraden 265 liegenden Vektors $\vec{k}_g$ gleich der Länge $l_1$ und damit natürlich auch gleich der Länge $l_2$ ist. Wenn diese Bedingungen und damit gleichzeitig die Bragg-Bedingung erfüllt sind, findet die bereits erwähnte Selbst-Beugung des Schreib/Lese-Lichtbündels 243 am Beugungsgitter 241 statt, bei der das abgebeugte Lese-Lichtbündel 257 entsteht, dessen Polarisation parallel zur von der a- und b-Achse aufgespannten Ebene ist. Der dem sich im Innern des Körpers 211 befindenden Teil des abgebeugten Lese-Lichtbündels 257 zugeordnete Wellenvektor $\vec{k}_d$ verläuft dementsprechend vom Mittelpunkt der Wellenvektorfläche zur äusseren Schnittlinie 261. In der Figur 12 ist noch der Wellenvektor $\vec{k}_{mod}$ dargestellt, der dem sich im Innern des Körpers 211 befindenden Teil des Modulations-Lichtbündels 247 zugeordnet ist. Die Einstrahlungsrichtung des Modulations-Lichtbündels wird vorteilhafterweise derart eingestellt, dass eine zum Wellenvektor $\vec{k}_{mod}$ parallele und im in der Figur 12 gezeichneten Fall von diesem aufgespannten Gerade im zwischen den beiden Vektoren $\vec{k}_i$ und $\vec{k}_d$ vorhandenen Sektor oder Winkelbereich durch den Mittelpunkt der Schnittlinien 261, 263 und damit auch durch den Mittelpunkt der Wellenvektorfläche verläuft, wobei die genannte Gerade beispielsweise im mittleren Bereich des besagten Sektors liegt, jedoch eventuell auch in dessen Randzonen liegen oder sogar mit einem der beiden Wellenvektoren $\vec{k}_i$ oder $\vec{k}_d$ zusammenfallen könnte. Wenn man den Wellenvektor $\vec{k}_{mod}$ im von den beiden Vektoren $\vec{k}_i$, $\vec{k}_d$ begrenzten Sektor einzeichnet, ist er zum Mittelpunkt der Wellenvektorfläche hin und also im allgemeinen entgegengesetzt zu den Vektoren $\vec{k}_i$, $\vec{k}_d$ gerichtet. Es bestände jedoch die Möglichkeit das Modulations-Lichtbündel durch die gleiche Grenzfläche in den Körper einzustrahlen wie die beiden Schreib-Lichtbündel, so dass dann der Vektor $\vec{k}_{mod}$ die gleiche allgemeine Richtung hätte wie die beiden Vektoren $\vec{k}_i$, $\vec{k}_d$. Durch Einstrahlen des Modulations-Lichtbündels in einer der vorgängig angegebenen Richtungen kann erreicht werden, dass das Modulations-Lichtbündel 247 und das abgebeugte Lese-Lichtbündel 257 fast parallel zueinander sind und zum Beispiel miteinander höchstens einen Winkel von 5° bilden. Wenn der das Beugungsgitter 251 enthaltende Bereich des Körpers 211 durch das Modulations-Lichtbündel 247 ortsabhängig verschieden "beleuchtet" und das Beugungsgitter dadurch moduliert wird, bewirkt dies lokale Veränderungen des Gittervektors $\vec{k}_g$, so dass dessen Wellenzahl nicht mehr genau gleich den Längen $l_1$ und $l_2$ ist. Die Bragg-Bedingung ist dementsprechend dann nicht mehr genau erfüllt, wobei aber die Abweichung wiederum verhältnismässig gering ist, so dass die Modulation auch bei dieser Variante der Einrichtung mit grossem Wirkungsgrad erfolgt. Während man also bei der in der Figur 10 dargestellten Einrichtung zusätzlich zu den beiden durch Teilung eines Laser-Lichtbündels erzeugten Schreib-Lichtbündeln 143, 145 noch ein separates Lese-Lichtbündel 155 einstrahlt, dessen Lichtfrequenz vorzugsweise von derjenigen der Schreib-Lichtbündel verschieden ist, muss bei der Einrichtung gemäss der Figur 11 nur eine einzige Lichtquelle zur Erzeugung von kohärentem Licht vorhanden sein.

Da die Schnittlinien 261, 263 symmetrisch zur a-Achse sind, ist im in der Figur 12 dargestellten Fall, dass der Gittervektor genau rechtwinklig zur a-Achse verläuft, auch der Abstand des Endes des sich auf der linken Seite der a-Achse befindenden Wellenvektors $\vec{k}_w$ vom sich auf der linken Seite der a-Achse befindenden Schnittpunkt der Geraden 265 und der Schnittlinie 251 gleich der Länge $l_2$ und damit auch gleich der Länge $l_1$. Daher wird auch das dem sich auf der linken Seite der a-Achse befindenden Vektor $\vec{k}_w$ zugeordnete Schreib-Lichtbündel durch Selbst-Beugung am Beugungsgitter gebeugt und bildet also ebenfalls gleichzeitig ein Lese-Lichtbündel. Dem durch diesen Beugungsvorgang entstehenden abgebeugten, nicht dargestellten Lese-Lichtbündel ist ein nicht dargestellter Wellenvektor zugeordnet, der bezüglich der a-Achse spiegelsymmetrisch zum in der Figur 12 gezeichneten Vektor $\vec{k}_d$ ist. Dieses zweite, abgebeugte Lese-Lichtbündel kann ebenfalls mit einer Auffangvorrichtung aufgefangen oder eventuell ausgeblendet werden.

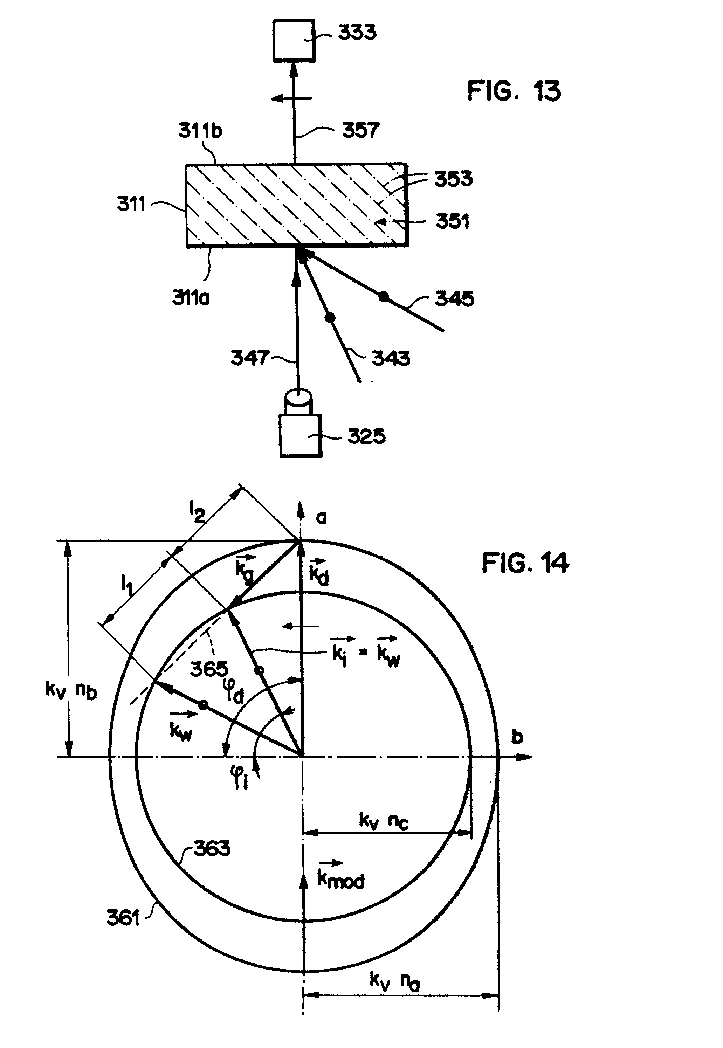

Die in der Figur 13 dargestellte Einrichtung weist ähnliche Bestandteile wie die Einrichtung gemäss der Figur 11, nämlich einen kristallinen Körper 311 mit zwei zueinander parallelen Grenzflächen 311a, 311b, nicht dargestellte Mittel zur Erzeugung von zwei kohärenten Schreib-Lichtbündeln 343, 345, eine Modulator-Lichtquelle 325 zur Erzeugung eines Modulations-Lichtbündels 347 und eine Licht-Auffangvorrichtung 333 zum Auffangen eines durch Selbstbeugung aus dem Schreib-Lichtbündel 343 erzeugten, abgebeugten Lese-Lichtbündels 357 auf. Während die Einstrahlung der beiden Schreib-Lichtbündel bei der Einrichtung gemäss der Figur 11 spiegelsymmetrisch zu einer zur b-Achse des Kristalls rechtwinkligen Ebene erfolgt, werden die beiden SchreibLichtbündel 343, 345 bei der Einrichtung gemäss der Figur 13 von der gleichen Seite einer zur b-Achse rechtwinkligen Ebene her durch die Grenzflächen 311a in den Körper 311 eingestrahlt, so dass in diesem ein Beugungsgitter 351 entsteht, dessen Gitterebenen 353 zur a- sowie zur b-Achse geneigt sind.

11

Die Figur 14 zeigt einen der Figur 12 entsprechenden Schnitt zur Veranschaulichung des Betriebs der Einrichtung gemäss der Figur 13, wobei die Schnittlinien 361 und 363 der zweischaligen Wellenvektorfläche sowie die der Geraden 265 entsprechende Gerade 365 ersichtlich sind. Die in der Figur 13 dargestellte Einrichtung arbeitet ähnlich wie die Einrichtung gemäss der Figur 11, wobei insbesondere auch die Bedingung $l_1 = l_2$ erfüllt wird. Die Einrichtung gemäss der Figur 13 wird jedoch abweichend von derjenigen gemäss der Figur 11 derart betrieben, dass das durch Selbstbeugung aus dem Schreib/Lese-Lichtbündel 343 gebildete, abgebeugte Lese-Lichtbündel 357 parallel zur a-Achse verläuft und rechtwinklig zur Grenzfläche 311b durch diese hindurch aus dem Körper 311 austritt. Dies erlaubt, das Modulations-Lichtbündel 347 parallel zum abgebeugten Lese-Lichtbündel 357 und rechtwinklig zur Grenzfläche 311a durch diese hindurch in den Körper 311 einzustrahlen, so dass also das Modulations-Lichtbündel 347 ausserhalb sowie innerhalb des Körpers 311 genau parallel zum abgebeugten Lese-Lichtbündel 357 ist. Dadurch dass das Modulations-Lichtbündel 347 rechtwinklig durch eine Grenzfläche des Körpers 311 hindurch in den letzteren eingestrahlt wird, können Unschärfen durch Dispersionseffekte des inkohärenten Modulations-Lichts im Körper 311 zumidest im wesentlichen vermieden werden.

Die Länge $l_2$ kann wegen Fehlern beim Anordnen der verschiedenen Teile der in den Figuren 11 und 13 dargestellten Einrichtungen innerhalb eines gewissen Toleranzbereichs von der Länge $l_1$ abweichen. Diese Abweichung soll jedoch höchstens ± 5%, zweckmässigerweise höchstens ± 2% und beispielsweise höchstens ± 1% der Länge $l_1$ betragen. Der Winkel $\vartheta_i$ soll vom die Bedingung $l_1 = l_2$ genau erfüllenden Wert höchstens etwa ± 1°, vorzugsweise höchstens ± 0,5° und beispielsweise ± 0,2° und wenn möglich noch weniger abweichen.

Für die Bildung der Körper 11, 111, 211, 311 werden feste Kristalle, nämlich Kaliumniobat-Einkristalle gezüchtet, d.h. künstlich hergestellt, auf die gewünschte Form und Grösse zurecht geschnitten und poliert. Die so hergestellten Kristalle enthalten auch bei Verwendung möglichst reiner Ausgangsmaterialien Spuren von Eisen und eventuell noch anderer metallischer und sonstiger Verunreinigungen. Da der Anteil von doppelt geladenen Eisenionen $Fe^{2+}$ grossen Einfluss auf die photorefraktiven Eigenschaften hat, können die Kristalle im Bedarfsfall bei ihrer Herstellung noch mit Eisen dotiert werden.

Das Eisen ist im Kristall zunächst ursprünglich zumindest teilweise in der Form von dreifach positiv geladenen $Fe^{3+}$-Ionen vorhanden. Diese müssen zur Erzielung der gewünschten Eigenschaften mindestens teilweise durch eine Reduktionsbehandlung in $Fe^{2+}$-Ionen umgewandelt werden. Dies kann mit der in der Figur 15 dargestellten Vorrichtung zum Reduzieren von Ionen geschehen. Die Vorrichtung weist einen Behälter 401 auf, von dessen Wandung zumindest der Mantel durchsichtig ist und beispielsweise aus Glas besteht. Der Behälter 401 kann mit einer Heizvorrichtung 403 beheizt werden, die durch eine Heizplatte gebildet ist, auf der der Behälter steht. Der Behälter 401 enthält eine elektrisch isolierende, durchsichtige Flüssigkeit 405, nämlich Silikonöl. Ein zur Bildung eines photorefraktiven Körpers 11 oder 111 oder 211 oder 311 dienender Kristall 411 wird für die Reduktionsbehandlung auf einander abgewandten Seiten einer durch ihn hindurch verlaufenden, zur kristallographischen c-Achse rechtwinkligen Ebene mit je einer Elektrode 413 versehen. Die Elektroden 413 werden durch elektrische Leiter mit Anschlüssen einer elektrischen Spannungsquelle 415 verbunden. Der Kristall 411 wird derart im Behälter 401 angeordnet und beispielsweise mit nicht dargestellten Haltemitteln gehalten, dass zumindest seine elektrodenfreien Flächen und beispielsweise alle seine Flächen von der Flüssigkeit 405 umschlossen sind. Bei der Reduktionsbehandlung wird eine elektrische Spannung, und zwar eine Gleichspannung, an die Elektroden angelegt, so dass im Kristall ein zu dessen c-Achse parallel gerichtetes, elektrisches Feld entsteht, das gleich gerichtet ist wie die spontane, elektrische Polarisation $\vec{P}_s$ des Kristalls. Die Richtung dieser spontanen Polarisation kann vorgängig durch ein bekanntes Verfahren, beispielsweise ein Ätzverfahren oder ein pyroelektrisches Verfahren, ermittelt werden. Das durch die angelegte Gleichspannung erzeugte, äussere, elektrische Feld unterstützt dann das mit der spontanen, elektrischen Polarisation verbundene, elektrische Feld. Die Feldstärke des durch die an die Elektro den 413 angelegte Gleichspannung erzeugten Feldes wird derart eingestellt, dass ein Gleichstrom mit einer im Bereich von 1 bis 20 $\mu A/cm^2$ liegenden Stromdichte durch den Kristall 411 hindurchströmt. Dieser Strom wird während einer beispielsweise bis 100 oder bis 500 Stunden betragenden Zeitdauer durch den Kristall hindurchgeleitet. Dieser wird durch den hindurchgeleiteten, elektrischen Strom und vor allem durch Wärmezufuhr mit der Heizvorrichtung 403 erwärmt. Falls der Kristall aus Kaliumniobat besteht, wird er vorteilhafterweise auf einer unter der Phasenumwandlungstemperatur liegenden, höchstens oder ungefähr 210° C betragenden Temperatur gehalten. Die Flüssigkeit 405, dient dabei zur Verhinderung von Funkenentladungen und zur Erzielung einer gleichmässig verteilten Temperatur im Kristall. Durch das Hindurchleiten von Strom durch den Kristall werden $Fe^{3+}$-Ionen in $Fe^{2+}$-Ionen umgewandelt, wobei der Kristall 411 Sauerstoff abgibt und wobei eventuell zusätzlich zu den Eisenionen auch noch andere Ionen durch einen Reduktionsvorgang umgewandelt werden. Der ursprünglich farblose und glasklare Kristall 411 wird im Verlauf des Reduktionsvorganges zunehmend bräunlich getönt. Die Stärke dieser Verfärbung gibt ein Mass für den Gehalt an $Fe^{2+}$-Ionen und kann durch die durchsichtige Wandung des Behälters 401 hindurch visuell und/oder mit einer optischen Messvorrichtung erfasst werden. Die Verfärbung und damit die Konzentration von $Fe^{2+}$-Ionen können durch ein entsprechendes Festlegen der Stromstärke, Temperatur und Behandlungsdauer auf einen gewünschten Wert gebracht werden. Die beispielsweise durch eine Schicht aufgetragener Leitsilberpaste gebildeten Elektrodem 413 können nach dem Reduktionsvorgang wieder entfernt werden.

Je grösser die Konzentration von $Fe^{2-}$-Ionen gemacht wird, desto grösser wird auch die Photoleitfähigkeit des Kristalls 411 und desto schneller kann ein Beugungsgitter aufgebaut, verändert und abgebaut werden. Wenn also der kristalline Körper beispielsweise als schnell schaltbarer, optischer Schalter dienen soll, bei dem Änderungen der Frequenz oder eventuell Einstrahlungsrichtung der Schreib-Lichtbündel möglichst schnell das Beugungsgitter und damit die Ablenkung des gleichzeitig mit den Schreib-Lichtbündeln eingestrahlten Lese-Lichtbündels ändern sollen, kann man durch eine grosse Eisendotierung und eine starke Reduktion von Eisenionen eine grosse Photoleitfähigkeit erzielen. Entsprechendes gilt für den Fall, dass der Kristall für eine schnelle Modulationsänderung ermöglichende Modulations-Einrichtung verwendet werden soll. Falls man hingegen wünscht, dass das Beugungsgitter nur langsam verändert und abgebaut wird oder überhaupt nur möglichst wenig abgebaut wird, damit der Körper eine durch ein Beugungsgitter dargestellte Information nach Änderungen der Frequenz oder eventuell der Richtung der Schreib-Lichtbündel oder nach dem Verschwinden der letzteren noch während kürzerer oder längerer Zeit speichern kann, wird dementsprechend nur eine geringe Photoleitfähigkeit eingestellt.

Die Einrichtungen und ihre Betriebsverfahren können zusätzlich zu den bereits beschriebenen Varianten noch in verschiedener Hinsicht modifiziert werden. Beispielsweise kann man bei der in der Figur 2 dargestellten Einrichtung als Lese-Lichtquelle statt einen Laser oder zusätzlich zu diesem, andere, etwa einen Lichtwellenleiter und/oder mindestens eine Linse aufweisende Mittel vorsehen, um dem lichtdurchlässigen Körper ein kohärentes Lese-Lichtbündel zuzuführen. Des weitern kann man die in der Figur 2 dargestellte Einrichtung dahingehend ändern, dass man die Anzahl der Licht-Auffänger 35 grösser oder kleiner als drei macht. Man kann beispielsweise auch nur einen einzigen Auffänger vorsehen, so dass die Einrichtung in diesem Fall gewissermassen einen optischen Ein/Aus-Schalter bilden würde. Wenn man die Anzahl der wählbaren Ablenkungsrichtungen des Lese-Lichtbündels grösser als drei macht, müssen die zur Erzeugung und Einstrahlung der Schreib-Lichtbündel dienenden Mittel selbstverständlich derart ausgebildet sein, dass sie ermöglichen, eine entsprechende Anzahl von Beugungsgittern mit verschiedenen Werten der Wellenzahl $k_g$ zu erzeugen. Im Bedarfsfall kann man beispielsweise die Schreib-Lichtquelle mit einem Laser ausrüsten, dessen Lichtfrequenz kontinuierlich oder quasi-kontinuierlich veränderbar ist, um Beugungsgitter mit einer beliebig grossen Anzahl verschiedener Wellenzahlen $k_g$ zu erzeugen. Des weitern könnte man zum Verändern der Wellenzahl $k_g$ auch Mittel zum Andern der Einstrahlungsrichtung der Schreib-Lichtbündel vorsehen. Ferner können der oder die Auffänger statt mit Lichtwellenleitern 37 auch mit irgendwelchen anderen Mitteln zum Weiterführen und/ oder Verwerten von durch Licht dargestellten Informationen versehen sein. Im übrigen müssen die beiden Schreib-Lichtbündel und das in den gleichen Körper wie diese eingestrahlte Lese-Lichtbündel bei allen dargestellten Einrichtungen selbstverständlich nicht in der gleichen Ebene liegen, sondern lediglich alle parallel zu einer gemeinsamen Ebene sein.

Die kristallinen, photorefraktiven Körper könnten statt der Quaderform auch andere Formen haben, wobei es aber im allgemeinen vorteilhaft ist, wenn sie zwei zueinander parallele, ebene Grenzflächen haben, durch die Lichtbündel in die Körper eindringen und aus diesen austreten können. Es wäre auch möglich, einen photorefraktiven Körper sowohl zur zeitlich variablen Lichtablenkung als auch zur räumlichen. d.h. ortsabhängigen Lichtmodulation zu verwenden. Ferner könnte man mindestens einen photorefraktiven, in einer der vorgängig beschriebenen Arten zur variablen Lichtablenkung und/ oder ortsabhängigen, räumlichen Modulation verwendeten Körper mit andere optische oder opto-elektronische Funktionen ausübenden Elementen zu einem integrierten optischen Organ zusammenfassen. Dies könnte beispielsweise für die optische Datenverarbeitung sinnvoll sein.

Die Körper 11, 111, 211, 311 könnten statt aus dem optisch zweiachsigen Kaliumniobat auch aus einem anderen, lichtdurchlässigen, kristallinen, photorefraktiven, doppelbrechenden, optisch zwei- oder einachsigen Material, beispielsweise aus einem Einkristall aus $BaTiO_3$, $LiNbO_3$, $Ba_2NaNb_5O_{15}$ oder $Ba_2Sr_3Nb_{10}O_{30}$ bestehen.

Zudem kann man bei Kristallen aus Kaliumniobat und anderen photorefraktiven, festen kristallinen Materialien die photorefraktiven Eigenschaften beeinflussen und insbesondere die Photoleitfähigkeit erhöhen, indem man die Kristalle statt mit $Fe^{2+}$-Ionen oder zusätzlich zu diesen mit $Mn^{2+}$- und/oder $Co^{2+}$- und/oder $Cu+$-Ionen versieht. Man kann daher die Kristalle statt mit Eisen oder möglicherweise zusätzlich zu diesem mit einem oder eventuell mehreren der Metalle Mangan, Kobalt und Kupfer dotieren. Diese durch Dotieren in Kristalle eingebrachten und/oder eventuell als "natürliche" Verunreinigungen in Kristallen vorhandenen Metalle liegen in diesen ursprünglich in der Form von dreifach positiv geladenen Mangan-Ionen $Mn^{3+}$ bzw. dreifach positiv geladenen Kobalt-Ionen $Co^{3+}$ bzw. zweifach positiv geladenen Kupfer-Ionen $Cu^{2+}$ vor. Diese Ionen können nun durch eine Reduktionsbehandlung der Kristalle in die zur Beeinflussung der Photoleitfähigkeit benötigten Ionen der nächsttieferen, positiven Ladungs- oder Ionisierungsstufe, d.h. eben $Mn^{2+}$ bzw. $Co^{2+}$ bzw $Cu+$ umgewandelt werden. Die Reduktionsbehandlung kann dabei auf die gleiche oder ähnliche Weise erfolgen. wie es anhand der Figur 15 für die Eisenionen erläutert wurde. Das zur Reduktionsbehandlung in den Kristallen erzeugte. elektrische Feld soll dabei derart gerichtet sein. dass mindestens eine Komponente von ihm und vorzugsweise das ganze Feld die gleiche Richtung hat. wie die im betreffenden Kristall vorhandene, spontane, elektrische Polarisation. Der die letzteren darstellende Vektor verläuft jeweils parallel zu einer polaren Achse des Kristalls. die beim Kaliumniobat durch die kristallographische c-Achse gebildet ist.

Die beiden in den Körper 11 oder 111 eingestrahlten Schreib-Lichtbündel können statt einer zur c-Achse parallelen Polarisation eine zur von ihren Strahlungs-Richtungen aufgespannten Ebene parallele, lineare Polarisation haben. Die in den Figuren 2 und 10 dargestellten Einrichtungen könnten sogar dahingehend geändert werden, dass die Polarisation des sich ausserhalb des photorefraktiven Körpers befindenden Teils des eingestrahlten Lese-Lichtbündels statt eines rechten Winkels einen kleineren Winkel mit der c-Achse bildet. In diesem Fall würde das eingestrahlte Lese-Lichtbündel beim Eintritt in den Körper in zwei verschieden polarisierte Teile aufgeteilt, von denen dann nur derjenige mit zur c-Achse rechtwinkliger Pola risation für die anisotrope Beugung ausgenutzt würde. Es ist daher vorteilhaft, wenn die Polarisation des eingestrahlten Lese-Lichtbündels zumindest annähernd und vorzugsweise genau rechtwinklig zur c-Achse gerichtet ist.

Wenn die Körper 11, 111, 211, 311 aus einem Kaliumniobat-Kristall oder einem anderen optisch zweiachsigen Kristall bestehen, könnten die Gittervektoren $\vec{k}_g$ statt parallel zur b-Achse auch parallel zur a-Achse sein oder irgend eine andere Richtung haben, die parallel zu der von der a-Achse und der b-Achse aufgespannten Ebene ist. Wenn die Körper 11, 111, 211 statt aus Kaliumniobat aus einem anderen optisch zweiachsigen Material besteht, kann eine zur c-Achse rechtwinklige Schnittebene die Wellenvektorfläche je nach Materialeigenschaften auch bei zwei Schnittlinien schneiden, von denen die äussere kreis- und die innere ellipsenförmig ist. Ferner können die zwei Schnittlinien einander eventuell bei zwei Punkten berühren. Zudem können eventuell auch die Zuordnungen der Polarisationsrichtungen zu den Schnittlinien gegenüber den Figuren 6, 8, 12 und 14 vertauscht sein. Wenn die Körper 11, 111, 211, 311 aus einem optisch einachsigen Kristall bestehen, schneidet eine zur c-Achse rechtwinklige Schnittebene die zweischalige Wellenvektorfläche entlang von zwei konzentrischen Kreisen, so dass deren Schnittfigur keine Symmetrieachsen mehr hat. Ferner kann die durch die Richtungen der Vektoren $\vec{k}_g$, $\vec{k}_i$, $\vec{k}_d$ definierte Ebene statt einen rechten Winkel auch einen anderen Winkel mit der c-Achse bilden. Es ist jedoch vorteilhaft, wenn die genannte Ebene mit der c-Achse zumindest annähernd oder genau einen rechten Winkel bildet, weil dies den grössten Beugungswirkungsgrad ergibt. Allgemein ausgedrückt sind alle Anordnungen möglich, bei denen die Indikatrix durch das Schreib-Licht derart ortsabhängig periodisch deformiert und gedreht wird, dass der sich im Innern des Körpers befindende Teil eines eingestrahlten Lese-Lichtbündels oder mindestens eine Komponente davon unter einer Drehung der Polarisation bezüglich einer zum Gittervektor $\vec{k}_g$ und zu den Wellenvektoren $\vec{k}_i$, $\vec{k}_d$ parallelen Ebene gebeugt wird und das eingestrahlte sowie das abgebeugte Lese-Lichtbündel sich mit verschiedenen Wellenzahlen ausbreiten. Wenn man durch die durch die Schreib-Lichtbündel deformierte, zweischalige Wellenvektorfläche eine durch deren Mittelpunkt verlaufende und zu den Vektoren $\vec{k}_g$, $\vec{k}_i$, $\vec{k}_d$ parallele Schnittebene legt, sollen ferner die Richtungen und Wellenzahlen der drei genannten Vektoren bei allen möglichen Varianten vorzugsweise derart festgelegt und aufeinander abgestimmt sein, dass die vom Gittervektor $\vec{k}_g$ bei Erfüllung der Bragg-Bedingung aufgespannte Gerade die innere Schnittlinie entweder tangential berührt oder als Sekante durchdringt. Die letztgenannte Gerade bildet dabei selbstverständlich auch eine Tangente oder Sekante zur ganzen inneren Schale der Wellenvektorfläche. Zudem soll die innere Schnittlinie bei all denjenigen Stellen, bei denen beim Betrieb das Ende des einem Lese-Lichtbündel-Teil zugeordneten Wellenvektors $\vec{k}_d$ (Figuren 6, 8) oder $\vec{k}_i$ (Figuren 12, 14) auf ihr liegt, vorzugsweise mindestens einigermassen parallel zu einer zum Gittervektor $\vec{k}_g$ parallelen Geraden verlaufen. Die innere Schnittlinie soll bei den genannten Stellen mit einer zum Gittervektor parallelen Geraden zumindest bei denjenigen Varianten, bei denen das eingestrahlte Lese-Lichtbündel mit keinem der Schreib-Lichtbündel identisch ist und vorzugsweise auch bei der Variante mit Selbstbeugung eines Schreib/Lese-Lichtbündels am teilweise von ihm erzeugten Beugungsgitter höchstens einen Winkel von 10° , vorzugsweise höchstens einen Winkel von 5° und beispielsweise höchstens einen Winkel von 3° oder sogar nur einen Winkel von höchstens 1° bilden. Der Anfang und das Ende des Gittervektors $\vec{k}_g$ sollen dabei vorzugsweise in einem die Bragg-Bedingung genau erfüllenden Betriebszustand genau auf einer der beiden Schnittlinien der Wellenvektorfläche liegen.

Wenn das Lese-Lichtbündel wie bei den in den Figuren 2 und 10 dargestellten Einrichtungen mit einer von den Einstrahlungsrichtungen jedes Schreib-Lichtbündels verschiedenen Richtung in den photorefraktiven Körper eingestrahlt wird und vorzugsweise auch eine von der Frequenz des Schreib-Lichts abweichende Frequenz hat, sollen ferner die Richtungen und Polarisationen der eingestrahlten Lese-Lichtbündel jeweils derart festgelegt werden, dass die Wellenzahl des eingestrahlten Lese-Lichtbündels durch die äussere Schale und damit die äusseren Schnittlinien der zweischaligen Wellenvektorfläche festgelegt wird.

Die in den Figuren 2, 10 und 11 dargestellten Einrichtungen sind vor allem für Anwendungen vorgesehen, bei denen das Beugungsgitter durch Ändern der Frequenz oder Einstrahlungsrichtung des Schreib-Lichts oder eines durch inkohärentes Modulations-Licht dargestellten Bildes das Beugungsgitter schnell geändert werden kann. Bei solchen Anwendungen wird das zum "Lesen" des Beugungsgitters dienende Lese-Licht in den photorefraktiven Körper selbstverständlich während Zeiträumen eingestrahlt, in denen auch zwei das Beugungsgitter erzeugende, kohärente Schreib-Lichtbündel eingestrahlt werden. Wie bei der Beschreibung des Reduktionsverfahrens erwähnt, wäre es jedoch auch möglich, die photorefraktiven Körper derart auszubilden, dass das Beugungsgitter mehr oder weniger lang gespeichert wird. In diesem Fall könnte man das Beugungsgitter auch durch Einstrahlen eines Lese-Lichtbündels in Zeiträumen lesen, in denen kein Schreib-Licht mehr in den photorefraktiven Körper eingestrahlt wird. Derartige, das Beugungsgitter nach dem Verschwinden des Schreib-Lichts erhaltende, photorefraktive Körper könnten beispielsweise benutzt werden, um gewissermassen optische, bistabile oder multistabile Schalter oder Bildspeicher zu bilden.

Eventuell könnte man bei der in der Figur 2 dargestellten Einrichtung vorsehen, die Richtung des abgebeugten Lese-Lichtbündels statt durch Ändern der Wellenzahl $k_g$ durch Ändern der Frequenz und Vakuum-Wellenzahl $k_v$ des Lese-Lichtbündels zu ändern. Des weitern könnte man bei der in der Figur 2 und insbesondere bei der in der Figur 10 dargestellten Einrichtung eventuell nur ein einziges Schreib-Lichtbündel in den lichtdurchlässigen Körper einstrahlen und dafür in dessen Strahlenweg ein Blendengitter anordnen, so dass das Schreib-Licht im Körper trotzdem ein örtlich variierendes Lichtfeld erzeugt, das zumindest örtlich ähnlich wie eine stehende Welle variiert.

Im übrigen können die verschiedenen, vorgängig beschriebenen Einrichtungs- und Verfahrensvarianten in manigfaltiger Weise miteinander kombiniert werden.

Bei den vorgängig anhand der Figuren 1 bis 14 beschriebenen Einrichtungen und Verfahren bestehen die Körper 11, 111, 211, 311 zumindest im wesentlichen aus einem festen Kristall, nämlich einem Einkristall. Die beschriebenen Verfahren liessen sich jedoch in weitgehend analoger Weise auch mit einem Körper durchführen, der einen optisch anisotropen Flüssigkristall bildet bzw. aufweist.

**Patentansprüche**

1. Verfahren zur veränderbaren Lichtablenkung und/oder zur ortsabhängigen Lichtmodulation durch Beugung, bei dem in einen Körper (11, 111, 211, 311) mit einem festen oder flüssigen, kristallinen oder zumindest kristallartigen Material mindestens ein Schreib-Lichtbündel (43, 45, 143, 145, 243, 245, 343, 345) zur Erzeugung eines Beugungsgitters (51, 151, 251, 351) und ein Lese-Lichtbündel (55, 155, 243, 343) eingestrahlt werden und aus diesem durch Beugung am Beugungsgitter (51, 151, 251, 351) ein abgebeugtes Lese-Lichtbündel (57, 157, 257, 357) erzeugt wird, dadurch gekennzeichnet, dass das mindestens eine Schreib-Lichtbündel (43, 45, 143, 145, 243, 245, 343, 345) und das eingestrahlte Lese-Lichtbündel (55, 155, 243, 343) derart in den Körper (11, 111, 211, 311) eingestrahlt werden, dass sich mindestens ein sich im Innern des Körpers (11, 111, 211, 311) befindender Teil des eingestrahlten Lese-Lichtbündels (55, 155, 243, 343) und der aus diesem Lese-Lichtbündel-Teil durch Beugung erzeugte, sich im Innern des Körpers (11, 111, 211, 311) befindende Teil des abgebeugten Lese-Lichtbündels (57, 157, 257, 357) mit verschiedenen Wellenzahlen ($k_i$, $k_d$) ausbreiten.

2. Verfahren nach Anspruch 1, wobei das Beugungsgitter (51, 151, 251) vorzugsweise durch zwei kohärente, im Körper (11, 111, 211, 311) miteinander interferierende, Schreib-Lichtbündel (43, 45, 143, 145, 243, 245, 343, 345) erzeugt wird, dadurch gekennzeichnet, dass die Richtungen des mindestens einen, kohärenten Schreib-Lichtbündels (43, 45, 143, 145, 243, 245, 343, 345) sowie des in den Körper (11, 111, 211, 311) eingestrahlten, kohärenten Lese-Lichtbündels (55, 155, 243, 343) und die Polarisation des eingestrahlten Lese-Lichtbündels (55, 155, 243, 343) derart festgelegt sind, dass die zweischalige Wellenvektorfläche des Körpers (11, 111, 211, 311) von einer zum Gittervektor ($\vec{k}_g$) des Beugungsgitters (51, 151, 251, 351) und zu den Wellenvektoren ($\vec{k}_i$, $\vec{k}_d$) des einge strahlten und abgebeugten Lese-Lichtbündels (55, 57, 155, 157, 243, 257, 343, 357) parallelen Schnittebene entlang von zwei Schnittlinien (61, 63, 261, 263, 361, 363) geschnitten wird, von denen die eine (61, 261, 361) die andere (63, 263, 363) umschliesst, die Enden von zwei Wellenvektoren ($\vec{k}_i$, $\vec{k}_d$), von denen der eine dem genannten, sich im Innern des Körpers (11, 111, 211, 311) befindenden Teil des eingestrahlten und der andere dem genannten, sich im Innern des Körpers (11, 111, 211, 311) befindenden Teil des abgebeugten Lese-Lichtbündels zugeordnet ist, auf verschiedenen Schnittlinien (61, 63, 261, 263, 361, 363) liegen, und die sich im Innern des Körpers (11, 111, 211, 311) befindenden Teile des eingestrahlten und abgebeugten Lese-Lichtbündels (55, 57, 155, 157, 243, 257, 343, 357) verschiedene Polarisationen bezüglich der genannten Schnittebene haben, wobei die Polarisation des eingestrahlten, linear polarisierten Lese-Lichtbündels (55, 155, 243, 343) vorzugsweise vor dem Eindringen in den Körper (11, 111, 211, 311) parallel zur Polarisationsrichtung nach dem Eindringen in den Körper (11, 111, 211, 311) ist, so dass sich das ganze in den Körper eingestrahlte Lese-Lichtbündel (55, 155, 243, 343) im Körper mit der gleichen Wellenzahl ($k_i$) ausbreitet.

3. Verfahren nach Anspruch 2, dadurch gekennzeichnet, dass die Richtungen der in den Körper (11, 111, 211, 311) eingestrahlten Schreib- und Lese-Lichtbündel (43, 45, 55, 143, 145, 155, 243, 245, 343, 345) derart festgelegt werden, dass die vom Gittervektor ($\vec{k}_g$) bei Erfüllung der Bragg-Bedingung aufgespannte Gerade (265, 365) eine Tangente oder Sekante zur inneren Schnittlinie (63, 263, 363) bildet, wobei die Gerade (265, 365) mit all denjenigen Abschnitten der inneren Schnittlinie (63, 263, 363). bei denen sich bei der Durchführung des Verfahrens das Ende des einem der Lese-Lichtbündel (57, 157, 243, 343) zugeordneten Wellenvektor ($\vec{k}_i$, $\vec{k}_d$) befinden kann, vorzugsweise höchstens einen 5° und beispielsweise höchstens einen 3° betragenden Winkel bildet.

4. Verfahren nach Anspruch 2 oder 3, dadurch gekennzeichnet, dass die Polarisation des eingestrahlten, linear polarisierten Lese-Lichtbündels (55, 155) derart gerichtet ist, dass das Ende des Wellenvektors ($\vec{k}_i$), der dem genannten sich im Innern des Körpers (11, 111) befindenden Teils dieses Lese-Lichtbündels (55, 155) zugeordnet ist, auf der äusseren Schnittlinie (61) liegt.

5. Verfahren nach Anspruch 2 oder 3, wobei zwei kohärente Schreib-Lichtbündel (243, 245, 343, 345) in den Körper (211, 311) eingestrahlt werden, ein inkohärentes Modulations-Lichtbündel (247, 347) in den Körper (211, 311) eingestrahlt und das Beugungsgitter (251, 351) mit diesem ortsabhängig moduliert wird, dadurch gekennzeichnet, dass die beiden Schreib-Lichtbündel (243, 245, 343, 345) derart polarisiert sind, dass die Enden sich im Innern des Körpers (211, 311) befindender Teile von ihnen zugeordneten Wellenvektoren ($\vec{k}_w$) auf der inneren Schnittlinie (263, 363) liegen und eine Gerade (265, 365) aufspannen, die die innere Schnittlinie (263, 363) durchdringt und eine Sekante zu dieser bildet, dass eines der beiden Schreib-Lichtbündel (243, 245, 343, 345) gleichzeitig das eingestrahlte Lese-Lichtbündel (243. 343) bildet und das Ende des dem sich im Innern des Körpers (211. 311) befindenden Teil des abgebeugten Lese-Lichtbündels (257. 357) zugeordneten Wellenvektors ($\vec{k}_d$) auf der äusseren Schnittlinie (261. 361) liegt, wobei die Richtungen der Schreib-Lichtbündel (243. 245, 343, 345) derart festgelegt sind. dass die Enden der beiden den Schreib-Lichtbündeln zugeordneten Wellenvektoren ($\vec{k}_w$) einen Abstand ($l_1$) haben, der mindestens ungefähr und vorzugsweise genau gleich dem Abstand ($l_2$) ist. den der Schnittpunkt. in dem die genannte Gerade (265, 365) die äussere Schnittlinie (261. 361) auf derjenigen Seite der inneren Schnittlinie (263. 363) schneidet. auf der sich das Ende des dem abgebeugten Lese-Lichtbündel (257. 357) zugeordneten Wellenvektors ($\vec{k}_d$) befindet. vom Ende desjenigen einem Schreib-Lichtbündel zuge ordneten Wellenvektors ($\vec{k}_w$) hat. der sich näher bei ihm befindet.

6. Verfahren nach einem der Ansprüche 1 bis 4. wobei die Richtung des abgebeugten Lese-Lichtbündels (57) durch Ändern der Wellenzahl ($k_g$) des Gittervektors ($\vec{k}_g$) des Beugungsgitters (51) verändert wird, dadurch gekennzeichnet, dass die Einstrahlungsrichtung des eingestrahlten Lese-Lichtbündels (55) bezüglich des Beugungsgitters (51) beim Ändern der genannten Wellenzahl ($k_g$) konstant gehalten wird. wobei zum Ändern der genannten Wellenzahl ($k_g$) vorzugsweise die Frequenz von zwei in verschiedenen Richtungen in den Körper (11) eingestrahlten. kohärenten Schreib-Lichtbündeln (43. 45) verändert wird und vorzugsweise die Einstrahlungsrichtungen der letzteren bezüglich des Körpers (11) konstant gehalten werden.

7. Verfahren nach einem der Ansprüche 1 bis 4, wobei das in den Körper (111) eingestrahlte und das abgebeugte Lese-Lichtbündel (155, 157) aus kohärentem Licht bestehen, ein inkohärentes Modulations-Lichtbündel (147) in den Körper (111) eingestrahlt und das Beugungsgitter (151) mit diesen ortsabhängig moduliert wird, so dass das abgebeugte Lese-Lichtbündel (157) räumlich moduliert wird, dadurch gekennzeichnet. dass das Modulations-Lichtbündel (147) derart in den Körper (111) eingestrahlt wird. dass der seinem sich im Innern des Körpers (111) befindenden Teil zugeordnete Wellenvektor rechtwinklig zum Gittervektor ($\vec{k}_g$) des Beugungsgitters (151) und vorzugsweise parallel zu einer Ebene verläuft. zu der auch der Gittervektor ($\vec{k}_g$), das eingestrahlte und das abgebeugte Lese-Lichtbündel (155. 157) parallel sind.

8. Verfahren nach einem der Ansprüche 1 bis 7, dadurch gekennzeichnet. dass die Wellenvektoren ($\vec{k}_w$, $\vec{k}_i$. $\vec{k}_d$) des bzw. jedes Schreib-Lichtbündels (43, 45, 143, 145. 243, 245. 343. 345), des eingestrahlten Lese-Lichtbündels (55, 155, 243, 343) und des abgebeugten Lese-Lichtbündels (57, 157. 257, 357) im Innern des Körpers (11. 111, 211, 311) parallel zu einer Ebene verlaufen, die mit der kristallographischen c-Achse eines festen Kristalls bzw. der Direktor-Richtung eines Flüssigkristalls des Körpers (11. 111, 211, 311) einen Winkel, nämlich einen zweckmässigerweise zumindest annähernd und vorzugsweise genau rechten Winkel bildet, wobei beispielsweise ein Körper (11, 111, 211, 311) mit einem optisch zweiachsigen. festen Kristall oder einem optisch einachsigen Flüssigkristall verwendet wird.

9. Einrichtung zur veränderbaren Lichtablenkung und/oder zur ortsabhängigen Lichtmodulation durch Beugung, mit einem Körper (11. 111. 211. 311) mit einem lichtdurchlässigen, festen oder flüssigen. kristallinen oder zumindest kristallartigen, doppelbrechenden Material, dessen optische Brechungseigenschaften durch Licht veränderbar sind, Mitteln (15, 17, 19, 21, 23. 31. 127. 129, 131) zum Einstrahlen mindestens eines zur Erzeugung eines Beugungsgitters (51, 151. 251. 351) dienenden Schreib-Lichtbündels (43. 45, 143. 145, 243. 245. 343. 345) und eines Lese-Lichtbündels (55. 155, 243, 343) in den Körper (11, 111. 211. 311), so dass aus dem eingestrahlten Lese-Lichtbündel (55, 155. 243. 343) durch Beugung am Beugungsgitter (51, 151, 251. 351) ein abgebeugtes Lese-Lichtbündel (57. 157, 257. 357) erzeugt wird, dadurch gekennzeichnet. dass die genannten Mittel (17, 19, 21, 23, 31. 127. 129. 131, 151) derart ausgebildet und angeordnet sind. dass sich mindestens ein sich im Innern des Körpers (11. 111. 211. 311) befindender Teil des eingestrahlten Lese-Lichtbündels (55, 155, 243, 343) und der aus diesem Lese-Lichtbündel-Teil durch Beugung erzeugte, sich im Innern des Körpers (11, 111. 211. 311) befindende Teil des abgebeugten Lese-Lichtbündels (57, 157, 257. 357) mit verschiedenen Wellenzahlen ($k_i$, $k_d$) ausbreiten.

10. Verfahren zum Reduzieren von Ionen. beispielsweise dreifach positiv geladenen Eisenionen ($Fe^{3+}$) und/oder dreifach positiv geladenen Manganionen ($Mn^{3+}$) und/oder dreifach positiv geladenen Kobaltionen ($Co^{3+}$) und/oder zweifach positiv geladenen Kupferionen ($Cu^{2+}$) in Ionen der nächsttieferen Ionisierungsstufe, in einem festen Kristall (411) zur Bildung eines lichtdurchlässigen Körpers (11. 111. 211. 311) für die Durchführung des Verfahrens gemäss einem der Ansprüche 1 bis 8 und/oder für die Einrichtung gemäss Anspruch 9. dadurch gekennzeichnet, dass zum Reduzieren der Ionen ein elektrisches Feld an den Kristall (411) angelegt und ein Strom durch diesen hindurch geleitet wird, wobei das elektrische Feld vorzugsweise derart gerichtet wird. dass mindestens eine Komponente von ihm und vorteilhafterweise das ganze elektrische Feld die Richtung der spontanen, elektrischen Polarisation ($\vec{P}_s$) des Kristalls (411) hat.

FIG. 1

FIG. 3

FIG. 2

FIG. 10

0218555

FIG.4

FIG.5

FIG.15

0218555

FIG. 6

FIG. 7

0218555

FIG. 8

FIG. 9

FIG. 11

FIG. 12

0218555

FIG. 13

FIG. 14